(19) Europäisches Patentamt
European Patent Office
Office européen des brevets

(11) **EP 4 572 407 A1**

(12) **EUROPEAN PATENT APPLICATION**
published in accordance with Art. 153(4) EPC

(43) Date of publication:
**18.06.2025 Bulletin 2025/25**

(21) Application number: 23852661.0

(22) Date of filing: **16.03.2023**

(51) International Patent Classification (IPC):
*H04W 48/06* (2009.01)   *H04W 48/18* (2009.01)
*H04W 24/08* (2009.01)   *H04W 48/10* (2009.01)
*H04W 84/04* (2009.01)

(52) Cooperative Patent Classification (CPC):
**H04W 24/08; H04W 48/06; H04W 48/10;**
**H04W 48/18; H04W 84/04**

(86) International application number:
**PCT/KR2023/003540**

(87) International publication number:
**WO 2024/034764 (15.02.2024 Gazette 2024/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.08.2022   US 202263396626 P**

(71) Applicant: **LG Electronics Inc.**
**Yeongdeungpo-gu**
**Seoul 07336 (KR)**

(72) Inventors:
• **KIM, Sunhee**
  **Seoul 06772 (KR)**
• **KIM, Hyun Sook**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD AND APPARATUS FOR OPERATION OF UE IN WIRELESS COMMUNICATION SYSTEM**

(57)   A method of operating a node in a wireless communication system may comprise determining whether a terminal registered in a network is a first type terminal, determining terminal measurement information and measured cell information collection based on the terminal being the first type terminal, transmitting terminal measurement information and measured cell information collection indication to the terminal, receiving measurement information and measured cell information measured by the terminal, determining whether a signal threshold is used and the signal threshold based on the obtained measurement information and measured cell information, and transmitting the determined threshold to the terminal.

FIG. 10

## Description

### Technical Field

The following description relates to a wireless communication system and a terminal operation method. Specifically, it relates to a method of performing signal level-based network selection.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure relates to a method and device for performing signal level-based network selection in a wireless communication system.

The present disclosure relates to a method and device for determining a signal threshold (operator controlled signal threshold per access technology) for signal level-based network selection in a wireless communication system.

The present disclosure relates to a method and device for determining whether to use a two-step threshold or a single threshold for signal level-based network selection in a wireless communication system.

The present disclosure relates to a method and device for determining a single signal threshold to exclude selection of a public land mobile network (PLMN) having a low signal strength but a high priority when using a two-step threshold for signal level-based network selection in a wireless communication system.

The present disclosure relates to a method and device for determining another signal threshold to exclude selection of a PLMN having a high signal strength that is not expected when using a two-step threshold for signal level-based network selection in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal in a wireless communication system may comprise the terminal obtaining at least one signal threshold, determining a signal threshold used for network selection among the at least one signal threshold obtained by the terminal, and performing the network selection based on the determined signal threshold. Based on two signal thresholds being configured in the terminal and a first value being used as a cell selection criterion value based on consecutive first timer expirations, the terminal may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, as an example of the present disclosure, a terminal operating in a wireless communication system may comprise at least one transceiver, at least one processor, at least one memory operably connected to the at least one processor and configured to store instructions that, when executed, cause the at least one processor to perform a specific operation. The specific operation may obtain at least one signal threshold, determine a signal threshold used for network selection among the obtained at least one signal threshold, and perform the network selection based on the determined signal threshold. Based on two signal thresholds being configured in the terminal and a first value being used as a cell selection criterion value based on consecutive first timer expirations, the terminal may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, as an example of the present disclosure, a method of operating a network node in a wireless communication system may comprise determining whether to perform signal threshold-based network selection in a terminal and transmitting at least one signal threshold to the terminal based on performing the signal threshold-based network selection. The terminal may determine a signal threshold used for network selection among the at least one signal threshold and perform the network selection. Based on two signal thresholds being configured in the terminal and a first value being used as a cell selection criterion value based on consecutive first timer expirations, the terminal may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, as an example of the present disclosure, a network node operating in a wireless communication system may comprise at least one transceiver, at least one processor, and at least one memory operably connected to the at least one processor and configured to store instructions that, when executed, cause the at least one processor to perform a specific operation. The specific operation may determine whether to perform signal threshold-based network selection in a terminal and control the at least one transceiver to transmit at least one signal threshold to the terminal based on performing the signal threshold-based network selection. The terminal may determine a signal threshold used for network selection among the at least one signal threshold and perform the network selection. Based on two signal thresholds being configured in the terminal and a first value being used as a cell selection criterion value based on consecutive first timer expirations, the terminal may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, as an example of the present disclosure, a device may comprise at least one memory and at least one processor functionally connected to the at least one memory. The at least one processor may control the device to obtain at least one signal threshold, determine a signal threshold used for network selection among the obtained at least one signal threshold and perform the network selection based on the determined signal threshold. Based on two signal thresholds being configured in the device and a first value being used as a cell selection criterion value based on consecutive first timer expirations, the device may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, as an example of the present disclosure, a non-transitory computer-readable medium storing at least one instruction may comprise the at least one instruction executable by a processor. The at least one instruction may control a device to obtain at least one signal threshold, determine a signal threshold used for network selection among the obtained at least one signal threshold, and perform the network selection based on the determined signal threshold. Based on two signal thresholds being configured in the device and the first value being used as a cell selection criterion value based on consecutive first timer expirations, the device may determine a first signal threshold among the at least one signal threshold as the signal threshold used for the network selection, and based on the first value being not used as the cell selection criterion value, a second signal threshold among the at least one signal threshold may be determined as the signal threshold used for the network selection.

In addition, the following matters may be applied commonly.

As an example of the present disclosure, the signal threshold used for the network selection may be an operator controlled signal threshold per access technology, and based on the network selection being performed based on the determined signal threshold, the terminal may select a network with a high priority among networks capable of accessing a cell having a signal quality better than a signal level of the determined signal threshold.

In addition, as an example of the present disclosure, based on the terminal performing the network selection, an access stratum (AS) of the terminal may decode system information received from a cell having a strongest signal strength to derive a network ID, perform measurement on the cell, and deliver the derived network ID and cell measurement information to a non-access stratum (NAS) of the terminal, and the NAS of the terminal may determine the signal threshold to perform the network selection. The cell may be a cell providing a connection establishment failure offset function, the AS of the terminal may determine use of the first value as the cell selection criterion value based on the consecutive first timer expirations and indicates use of the first value to the NAS of the terminal, and the NAS of the terminal may determine the signal threshold as the first signal threshold based on use of the first value.

In addition, as an example of the present disclosure, the cell may be a cell doing not provide a connection establishment failure offset function, the AS of the terminal may determine non-use of the first value as the cell selection criterion value even after the consecutive first timer expirations and indicates non-use of the first value to the NAS of the terminal, and the NAS of the terminal may determine the signal threshold as the first signal threshold based on non-use of the first value.

In addition, as an example of the present disclosure, based on one signal threshold being configured in the terminal, the terminal may receive a signal threshold from a first network node and perform the network selection based on the received signal threshold.

In addition, as an example of the present disclosure, based on two signal thresholds being configured in the terminal, the terminal may receive both the two signal thresholds from a first network node.

In addition, as an example of the present disclosure, based on the two signal thresholds being configured in the terminal, the terminal may receive the second signal threshold and determine the first signal threshold based on a sum of the second signal threshold and the first value, and the second threshold may be determined as a default signal threshold.

In addition, as an example of the present disclosure, the first value may be $Q_{offsettem1}$.

In addition, as an example of the present disclosure, it may be determined whether the terminal registered in a network is a first type terminal, and based on the terminal being the first type terminal, terminal measurement information and measured cell information may be collected to determine whether the signal threshold is used and the signal threshold and the determined signal threshold may be transmitted to the terminal.

In addition, as an example of the present disclosure, the first type terminal may be a stationary Internet of things (IoT) terminal, and the node may determine whether the terminal is the first type terminal based on at least one of terminal type indication information or terminal subscription information.

In addition, as an example of the present disclosure, the first signal threshold may be a signal threshold excluding selection of a public land mobile network (PLMN) with a high signal quality that is not expected by the terminal, and the second signal threshold may be a signal threshold excluding selection of a PLMN with a low signal strength and a high priority.

## Advantageous Effects

The present disclosure can provide a method of performing signal level-based network selection in a wireless communication system.

The present disclosure can provide a method of determining a signal threshold (operator controlled signal threshold per access technology) for signal level-based network selection in a wireless communication system.

The present disclosure can provide a method of determining whether to use a two-step threshold or a single threshold for signal level-based network selection in a wireless communication system.

The present disclosure can provide a method of determining a single signal threshold to exclude selection of a public land mobile network (PLMN) having a low signal strength but a high priority when using a two-step threshold for signal level-based network selection in a wireless communication system.

The present disclosure can provide a method of determining another signal threshold to exclude selection of a PLMN having a high signal strength that is not expected when using a two-step threshold for signal level-based network selection in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

## Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 is a view showing an example of a communication system applicable to the present disclosure.
FIG. 2 is a view showing an example of a UE to which the implementation of the present disclosure is applied.
FIG. 3 is a view showing an example of functional separation of a general NG-RAN and 5th generation core (5GC).
FIG. 4 is a view showing an example of a general architecture of a 5th generation (5G) system.

FIG. 5 is a diagram illustrating a method of receiving a PLMN list based on SOR in a process of registering a terminal in a VPLMN applicable to the present disclosure.

FIG. 6 is a diagram illustrating a method of updating a list of preferred PLMN/access technology combinations applicable to the present disclosure.

FIG. 7 may be operation based on an AI/ML model applicable to the present disclosure.

FIG. 8 may be operation based on an AI/ML model applicable to the present disclosure.

FIG. 9 is a diagram illustrating a case where camping is performed on a wrong cell applicable to the present disclosure.

FIG. 10 is a diagram showing a signal threshold determination method applicable to the present disclosure.

FIG. 11 is a diagram illustrating a method of performing PLMN selection of a terminal based on a two-step threshold applicable to the present disclosure.

FIG. 12 is a diagram illustrating a method of performing a signal threshold determination operation in a two-step threshold applicable to the present disclosure.

FIG. 13 is a diagram showing a terminal operation applicable to the present disclosure.

FIG. 14 is a diagram showing a terminal operation based on a two-step threshold applicable to the present disclosure.

FIG. 15 is a flowchart illustrating a network operation applicable to the present disclosure.

## Mode for Invention

Following embodiments are achieved by combination of structural elements and features of the present disclosure in a predetermined manner. Each of the structural elements or features should be considered selectively unless specified separately. Each of the structural elements or features may be carried out without being combined with other structural elements or features. Also, some structural elements and/or features may be combined with one another to constitute the embodiments of the present disclosure. The order of operations described in the embodiments of the present disclosure may be changed. Some structural elements or features of one embodiment may be included in another embodiment, or may be replaced with corresponding structural elements or features of another embodiment.

In the description of the drawings, procedures or steps which render the scope of the present disclosure unnecessarily ambiguous will be omitted and procedures or steps which can be understood by those skilled in the art will be omitted.

In the entire specification, when a certain portion "comprises" or "includes" a certain component, this indicates that the other components are not excluded, but may be further included unless specially described. The terms "unit", "-or/er" and "module" described in the specification indicate a unit for processing at least one function or operation, which may be implemented by hardware, software and a combination thereof. In addition, "a or an", "one", "the" and similar related words may be used as the sense of including both a singular representation and a plural representation unless it is indicated in the context describing the present specification (especially in the context of the following claims) to be different from this specification or is clearly contradicted by the context.

In this specification, the embodiments of the present disclosure are described with focus on the relationship of data reception and transmission between a base station and a mobile station. Herein, the base station means a terminal node of a network that performs direct communication with the mobile station. In this document, a specific operation, which is described to be performed by a base station, may be performed by an upper node of the base station in some cases.

That is, in a network consisting of a plurality of network nodes including a base station, various operations for communicating with a mobile station may be performed by the base station or network nodes other than the base station. Herein, "base station" may be replaced by such terms as "fixed station", "Node B", "eNode B(eNB)", "gNode B(gNB)", "ng-eNB", "advanced base station(ABS)", or "access point".

Also, in the embodiments of the present disclosure, "terminal" may be replaced by such terms as "user equipment(UE)", "mobile station(MS)", "subscriber station(SS)", "mobile subscriber station(MSS)", "mobile terminal" or "advanced mobile station(AMS)".

In addition, a transmission end refers to a fixed and/or mobile node that provides a data service or a voice service, and a reception end means a fixed and/or mobile node that receives a data service or a voice service. Accordingly, in the case of an uplink, a mobile station may be a transmission end, and a base station may be a reception end. Likewise, in the case of a downlink, a mobile station may be a reception end, and a base station may be a transmission end.

The embodiments of the present disclosure may be supported by standard documents disclosed in at least one of the following radio access systems: an IEEE 802 xx system, a 3rd generation partnership project (3GPP) system, a 3GPP long term evolution (LTE) system, a 3GPP 5th generation (5G) new radio (NR) system and a 3GPP2 system, and in particular, the embodiments of the present disclosure may be supported by the following documents: 3GPP TS (technical specification) 38.211, 3GPP TS 38.212, 3GPP TS 38.213, 3GPP TS 38.321, and 3GPP TS 38.331.

In addition, the embodiments of the present disclosure are applicable to another radio access system but is not limited to the above-described system. As an example, they are applicable to a system applied after a 3GPP 5G NR system and are not limited to a specific system.

That is, obvious steps and parts not described in the embodiments of the present disclosure may be described with reference to the above documents. In addition, all the terms disclosed in this document may be explained by the standard document.

Hereinafter, a preferred embodiment according to the present disclosure will be described in detail with reference to accompanying drawings. Detailed descriptions disclosed below together with accompanying drawings are intended to describe example embodiments of the present disclosure and not intended to show any sole embodiment in which a technical configuration of the present disclosure can be implemented.

In addition, specific terms used in the embodiments of the present disclosure are provided to help understand the present disclosure, and such specific terms may be used in any other modified forms without departing from the technical idea of the present disclosure.

The following technology may be applied to various radio access systems such as Code Division Multiple Access (CDMA), Frequency Division Multiple Access (FDMA), Time Division Multiple Access (TDMA), Orthogonal Frequency Division Multiple Access (OFDMA), Single Carrier Frequency Division Multiple Access (SC-FDMA) and the like.

For clarity of explanation, the descriptions below are based on a 3GPP communication system (e.g. LTE, NR and the like), but the technical idea of the present disclosure is not limited thereto. LTE may mean a technology after 3GPP TS 36.xxx Release 8. Specifically, the LTE technology after 3GPP TS 36.xxx Release 10 may be referred to as LTE-A, and the one after 3GPP TS 36.xxx Release 13 may be referred to as LTE-A pro. 3GPP NR may mean a technology after TS 38.xxx Release 15. 3GPP 6G may mean a technology after TS Release 17 and/or Release 18. "xxx" means the specific number of a standard document. LTE/NR/6G may be referred to collectively as 3GPP system.

Contents described in standard documents released earlier than the present disclosure may be referred to for the background art, terms and abbreviations used in the present disclosure. As an example, 36.xxx and 38.xxx standard documents may be referred to.

For terms, abbreviations, and other backgrounds that may be used in this document, reference may be made to the following standard document descriptions published prior to this document. In particular, terms, abbreviations, and other background technologies related to LTE/EPS (Evolved Packet System) may refer to 36.xxx series, 23.xxx series, and 24.xxx series, and NR (new radio)/5GS related terms and abbreviations and other backgrounds may refer to the 38.xxx series, 23.xxx series and 24.xxx series.

Hereinafter, the present disclosure is described based on the terms defined as above.

Three major requirement areas of 5G include (1) an enhanced mobile broadband (eMBB) area, (2) a massive machine type communication (mMTC) area, and (3) an ultra-reliable and low latency communications (URLLC) area.

Some use cases may require multiple areas for optimization, and other use case may be focused on only one key performance indicator (KPI). 5G supports these various use cases in a flexible and reliable method.

## Communication system applicable to the present disclosure

Although not limited thereto, various descriptions, functions, procedures, proposals, methods and/or operating flowcharts of the present disclosure disclosed herein may be applied to various fields requiring wireless communication/connection (e.g., 5G) between devices.

Hereinafter, more detailed illustrations will be presented with reference to drawings. In the drawings/description below, unless otherwise mentioned, the same drawing symbol may illustrate the same or corresponding hardware block, software block or functional block.

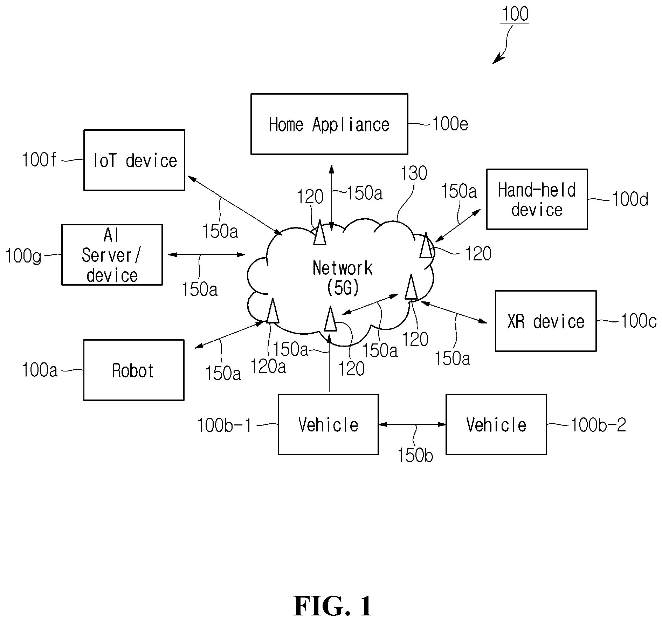

FIG. 1 is a view showing an example of a communication system applied to the present disclosure.

Referring to FIG. 1, a communication system 100 applied to the present disclosure includes a wireless device, a base station, and a network. Herein, the wireless device means a device performing communication using a wireless connection technology (e.g., 5G NR, LTE) and may be referred to as a communication/wireless/5G device. Without being limited thereto, the wireless device may include a robot 100a, vehicles 100b-1 and 100b-2, an extended reality (XR) device 100c, a hand-held device 100d, a home appliance 100e, an Internet of Thing (IoT) device 100f, and an artificial intelligence (AI) device/server 100g. For example, a vehicle may include a vehicle equipped with a wireless communication function, an autonomous driving vehicle, a vehicle capable of performing vehicle-to-vehicle communication, and the like. Herein, the vehicles 100b-1 and 100b-2 may include an unmanned aerial vehicle (UAV) (e.g., drone). The XR device 100c may include an augmented reality (AR)/virtual reality (VR)/mixed reality (MR) device and may be embodied in forms of a head-up display (HUD) installed in a vehicle, a television, a smartphone, a computer, a wearable device, a home appliance, digital signage, a vehicle, a robot, and the like. The hand-held device 100d may include a smartphone, a smart pad, a wearable device (e.g., a smart watch, smart glasses), a computer (e.g., a notebook and the like) and the like. The home appliance 100e may include a TV, a refrigerator, a washing machine, and the like. The IoT device 100f may include a sensor, a smart meter, and the like. For example, the base station 120 and the network 130 may be embodied as wireless devices, and a specific wireless device 120a may operate as a base station/network node to another wireless device.

The wireless devices 100a to 100f may be connected to the network 130 via the base station 120. AI technology may be applied to the wireless devices 100a to 100f, and the wireless devices 100a to 100f may be connected to the AI server 100g through the network 130. The network 130 may be constructed using a 3G network, a 4G(e.g., LTE) network or a 5G(e.g., NR) network. The wireless devices 100a to 100f may communicate with each other through the base station 120/the network 130 but perform direct communication (e.g., sidelink communication) not through the base station 120/the network 130. For example, the vehicles 100b-1 and 100b-2 may perform direct communication (e.g., vehicle to vehicle (V2V)/vehicle to everything (V2X) communication). In addition, the IoT device 100f (e.g., a sensor) may communicate directly with another IoT device (e.g., a sensor) or another wireless device 100a to 100f.

Wireless communication/connection 150a, 150b and 150c may be made between the wireless devices 100a to 100f/the base station 120 and the base station 120/the base station 120. Herein, wireless communication/connection may be performed through various wireless connection technologies (e.g., 5G NR) such as uplink/downlink communication 150a, sidelink communication 150b (or D2D communication), and base station-to-base station communication 150c (e.g., relay, integrated access backhaul (IAB)). A wireless device and a base station/a wireless device and a base station and a base station may transmit/receive radio signals through the wireless communication/connections 150a, 150b and 150c. For example, the wireless communication/connections 150a, 150b and 150c may transmit/receive a signal through various physical channels. To this end, based on various proposals of the present disclosure, at least a part of various processes of setting configuration information for transmission/reception of a radio signal, various processes of processing a signal (e.g., channel encoding/decoding, modulation/demodulation, resource mapping/demapping, and the like), and a resource allocation process may be performed.

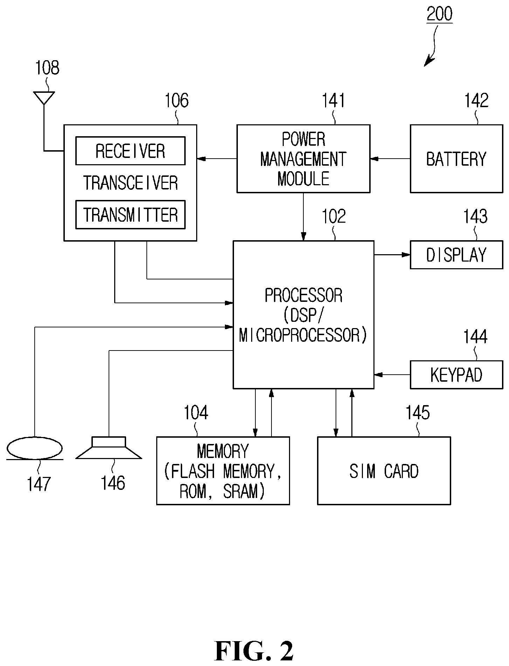

FIG. 2 is a view showing an example of a UE to which the implementation of the present disclosure is applied.

Referring to FIG. 2, a UE 200 may include a processor 202, a memory 204, a transceiver 206, one or more antennas 208, a power management module 241, a battery 242, a display 243, a keypad 244, a subscriber identification module (SIM) card 245, a speaker 246, and a microphone 247.

The processor 202 may be configured to implement a description, a function, a procedure, a proposal, a method and/or an operating flowchart disclosed in the present specification. The processor 202 may be configured to control one or more different components of the UE 200 to implement a description, a function, a procedure, a proposal, a method and/or an operating flowchart disclosed in the present specification. A layer of a wireless interface protocol may be embodied in the processor 202. The processor 202 may include an ASIC, other chipsets, a logic circuit and/or a data processing device. The processor 202 may be an application processor. The processor 202 may include at least one of a DSP, a central processing unit (CPU), a graphics processing unit (GPU), and a modem (modulator and demodulator).

The memory 204 may be coupled operably with the processor 202 and store various information for operating the processor 202. The memory 204 may include a ROM, a RAM, a flash memory, a memory card, a storage medium and/or another storage device. In case of implementation in software, a technology described herein may be implemented using a module (e.g., a procedure, a function, and the like) executing a description, a function, a procedure, a proposal, a method and/or an operating flowchart disclosed in the present specification. The module may be stored in the memory 204 and be executed by the processor 202. The memory 204 may be embodied in the processor 202 or outside the processor 202 in which case the memory 204 may be communicatively coupled with the processor 202 through various methods known in technology.

The transceiver 206 may be operably coupled with the processor 202 and transmit and/or receive a radio signal. The transceiver 206 may include a transmitter and a receiver. The transceiver 206 may include a baseband circuit for processing a radio frequency signal. The transceiver 206 may transmit and/or receive a radio signal by controlling the one or more antennas 208.

The power management module 241 may manage the power of the processor 202 and/or the transceiver 206. The battery 242 may supply power to the power management module 241.

The display 243 may output a result processed by the processor 202. The keypad 244 may receive an input to be used in the processor 202. The keypad 244 may be displayed on the display 243.

The SIM card 245 is an integrated circuit for safely storing an international mobile subscriber identity (IMSI) and a relevant key and may be used to identify and authenticate a subscriber in a hand-held telephone device like a mobile phone or a computer. In addition, contact information may be stored in many SIM cards.

The speaker 246 may output a sounded-related result processed in the processor 202. The microphone 247 may receive a sounded-related input to be used in the processor 202.

In an implement of the present specification, a UE may operate as a transmitting device in an uplink and a receiving device in a downlink. In an implement of the present specification, a base station may operate as a receiving device in a UL and a transmitting device in a DL. In the present specification, a base station may be referred to as a node B (Node B), an eNode B (eNB), and a gNB and may not be limited to a specific form.

In addition, as an example, a UE may be embodied in various forms according to a use example/service. A UE may be configured by various components, devices/parts and/or modules. For example, each UE may include a communication device, a control device, a memory device, and an addition component. A communication device may a communication circuit and a transceiver. For example, a communication circuit may include one or more processors and/or one or more memories. For example, a transceiver may include one or more transceivers and/or one or more antennas. A control device may be electrically coupled with a communication device, a memory device and an additional component and control an overall operation of each UE. For example, a control device may control an electric/mechanical operation of each UE based on a program/a code/an instruction/information stored in a memory device. A control device may transmit information stored in a memory device to the outside (e.g., another communication device) via a communication device through a wireless/wired interface or store information received from the outside (e.g., another communication device) through the wireless/wired interface in the memory device.

An additional component may be configured in various ways according to a type of a UE. For example, an additional component may include at least one of a power device/battery, an input/output (I/O) device (e.g., an audio I/O port, a video I/O port), a driving device, and a computing device. In addition, without being limited thereto, a UE may be embodied in forms of the robot 100a of FIG. 1, the vehicles 100b-1 and 100b-2 of FIG. 1, the XR device 100c of FIG. 1, the hand-held device 100d of FIG. 1, the home appliance 100e of FIG. 1, the IoT device 100f of FIG. 1, a digital broadcast terminal, a hologram device, a public safety device, an MTC device, a medical device, a fintech device (or financial device), a security device, a climate/environment device, the AI server/device 100g of FIG. 1, the base station 120 of FIG. 1, and a network node. A UE may be used a mobile or fixed place according to a use example/service.

Various components, devices/parts and/or all the modules of a UE may be connected to each other through a wired interface, or at least a part thereof may be wirelessly connected through a communication device. In addition, each component, a device/a part and/or a module of a UE may further include one or more components. For example, a control device may be configured by a set of one or more processors. As an example, a control device may be configured by a set of a communication control processor, an application processor (AP), an electronic control unit (ECU), a GPU, and a memory control processor. As anther example, a memory device may be configured by a RAM, a dynamic RAM (DRAM), a ROM, a flash memory, a volatile memory, a non-volatile memory, and/or a combination thereof.

**5G System Architecture to which the Present Disclosure is Applicable**

A 5G system is an advanced technology from 4G LTE mobile communication technology and supports a new radio access technology (RAT), extended long term evolution (eLTE) as an extended technology of LTE, non-3GPP access (e.g., wireless local area network (WLAN) access), etc. through the evolution of the existing mobile communication network structure or a clean-state structure.

The 5G system is defined based on a service, and an interaction between network functions (NFs) in an architecture for the 5G system can be represented in two ways as follows.

Reference point representation: indicates an interaction between NF services in NFs described by a point-to-point reference point (e.g., N11) between two NFs (e.g., AMF and SMF).

Service-based representation: network functions (e.g., AMF) within a control plane (CP) allow other authenticated network functions to access its services. The representation also includes a point-to-point reference point, if necessary.

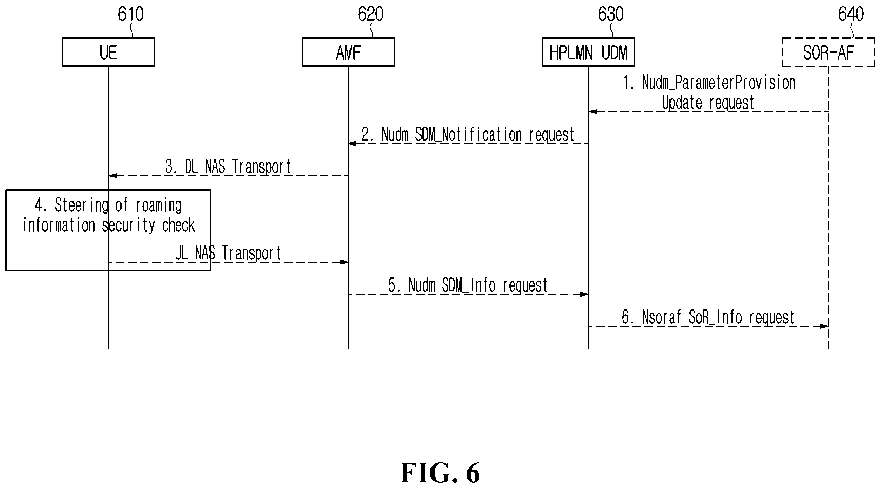

5GC (5G Core) may include various components, part of which are shown in FIG. 6, including an access and mobility management function (AMF), a session management function (SMF), a policy control function (PCF), a Prose user plane function (UPF), an application function (AF), unified data management (UDM), and a non-3GPP interworking function (N3IWF).

A UE is connected to a data network via the UPF through a next generation radio access network (NG-RAN) including the gNB. The UE may be provided with a data service even through untrusted non-3GPP access, e.g., a wireless local area network (WLAN). In order to connect the non-3GPP access to a core network, the N3IWF may be deployed.

The N3IWF performs a function of managing interworking between the non-3GPP access and the 5G system. When the UE is connected to non-3GPP access (e.g., WiFi referred to as IEEE 801.11), the UE may be connected to the 5G system through the N3IWF. The N3IWF performs control signaling with the AMF and is connected to the UPF through an N3 interface for data transmission.

The AMF may manage access and mobility in the 5G system. The AMF may perform a function of managing (non-access stratum) NAS security. The AMF may perform a function of handling mobility in an idle state.

The UPF performs a function of gateway for transmitting and receiving user data. The UPF node 440 may perform the entirety or a portion of a user plane function of a serving gateway (S-GW) and a packet data network gateway (P-GW) of 4G mobile communication.

The UPF is a component that operates as a boundary point between a next generation radio access network (NG-RAN) and the core network and maintains a data path between the gNB and the SMF. In addition, when the UE moves over an area served by the gNB, the UPF serves as a mobility anchor point. The UPF may perform a function of handling a PDU. For mobility within the NG-RAN (which is defined after 3GPP Release-15), the UPF may route packets. In addition, the UPF may also serve as an anchor point for mobility with another 3GPP network (RAN defined before 3GPP Release-15, e.g., universal mobile telecommunications system (UMTS) terrestrial radio access network (UTRAN), evolved (E)-UTRAN or global system for mobile communication (GERAN)/enhanced data rates for global evolution (EDGE) RAN. The UPF may correspond to a termination point of a data interface toward the data network.

The PCF is a node that controls an operator's policy. The AF is a server for providing various services to the UE. The UDM is a server that manages subscriber information, such as home subscriber server (HSS) of 4G mobile communication. The UDM stores and manages the subscriber information in a unified data repository (UDR).

The SMF may perform a function of allocating an Internet protocol (IP) address of the UE. In addition, the SMF may control a packet data unit (PDU) session.

For convenience of explanation, hereinafter, reference numerals may be omitted for AMF, SMF, PCF, UPF, AF, UDM, N3IWF, gNB, or UE, which may operate with reference to contents described in standard documents released earlier than the present document.

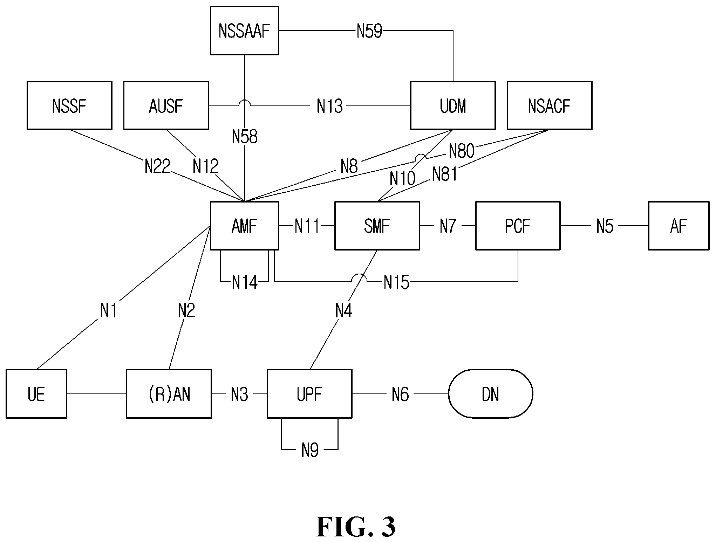

FIG. 3 is a view showing an example of expressing the structure of a wireless communication system applied to the present disclosure from a node perspective.

Referring to FIG. 3, a UE is connected to a data network (DN) through a next generation RAN. A control plane function (CPF) node performs all or a part of the functions of a mobility management entity (MME) of 4G mobile communication and all or a part of serving gateway (S-GW) and PDN gateway (P-GW) functions. The CPF node includes AMF and SMF.

A UPF node performs a function of a gateway in which data of a user is transmitted and received.

An authentication server function (AUSF) authenticates and manages a UE. A network slice selection function (NSSF) is a node for network slicing described below.

A network exposure function (NEF) provides a mechanism that safely opens the service and function of 5G core.

Reference points in FIG. 3 are described as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in a non-roaming scenario and a reference point between AMF and PCF of a visited network in a roaming scenario. N16 represents a reference point between SMFs. N22 represents a reference point between AMF and NSSF. N30 represents a reference point between PCF and NEF. N33 may represent a reference point between AF and NEF, and the above-described entity and interface may be configured with reference to contents described in standard documents released earlier than the present document.

A radio interface protocol is based on the 3GPP radio access network standard. The radio interface protocol is horizontally divided into a physical layer, a data link layer, and a network layer, and is vertically divided into a user plane for transmission of data information and a control plane for transfer of control signal (signaling).

The protocol layers may be divided into L1 (layer-1), L2 (layer-2), and L3 (layer-3) based on the three lower layers of the open system interconnection (OSI) reference model widely known in communication systems.

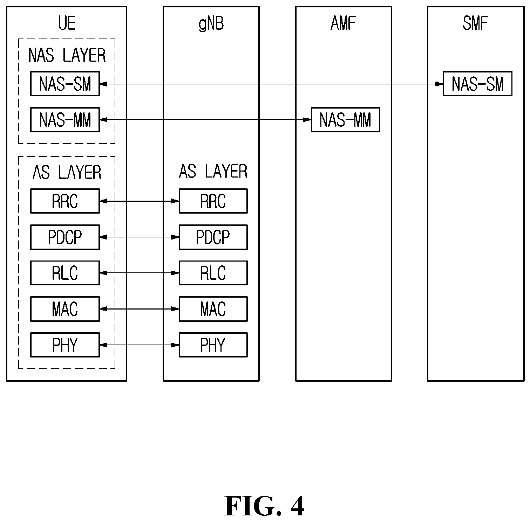

Hereinafter, the present disclosure describes each layer of a wireless protocol. FIG. 4 is a view showing an example of the structure of a radio interface protocol between a UE and a gNB.

Referring to FIG. 4, an access stratum (AS) layer may include a physical (PHY) layer, a medium access control layer, a radio link control (RLC) layer, a packet data convergence protocol (PDCP) layer, and a radio resource control (RRC) layer, and an operation based on each layer may be performed with reference to contents described standard documents released earlier than the present document.

A terminal may obtain system information broadcast from a base station and select and camp on a suitable cell. Thereafter, the terminal may obtain service-based configuration information and be connected to the network. For example, a Public Land Mobile Network (PLMN) may be composed of an MCC (Mobile Country Code) and an MNC (Mobile Network Code). Here, the HPLMN (home PLMN) may be a PLMN where the terminal is defined, and the VPLMN (visited PLMN) may be a PLMN based on the current location of the terminal. In addition, the equivalent HPLMN may refer to a PLMN equivalent to the HPLMN, and a list may be stored in the USIM (Universal subscriber identity module) of the terminal. The terminal may select a PLMN with a high priority, and the PLMN selection may consider an automatic mode or a manual mode.

Specifically, the terminal may perform PLMN selection when it is turned on or returns from unserviceable coverage to communication coverage. The terminal may preferentially select the last registered PLMN or select a PLMN in the HPLMN or equivalent HPLMN list to register with the network. If the terminal cannot access the HPLMN or equivalent PLMN, the terminal may select another PLMN based on priority information stored in the USIM. That is, the terminal may select a PLMN based on priority information of the PLMN.

For example, when selecting a PLMN based on the automatic mode, the terminal may automatically select a PLMN based on a preset priority. Specifically, the terminal may automatically select PLMNs in the order of HPLMN, equivalent HPLMN, user PLMN, and other PLMN, but may not be limited thereto. On the other hand, when performing PLMN selection based on the manual mode, the terminal may display a list of accessible PLMNs and perform connection to a selected PLMN. For example, the terminal may also select a prohibited PLMN based on the PLMN selection, and when registration is successfully performed, the corresponding PLMN may no longer be prohibited.

Also, for example, when selecting a PLMN based on roaming, the terminal may receive a service from a VPLMN rather than an HPLMN. For example, the terminal may be registered in a PLMN outside the coverage of the HPLMN (e.g., another country) based on information stored in the USIM. For example, the terminal may periodically search for the HPLMN, but may not be limited thereto.

In addition, with respect to PLMN selection of a roaming terminal, Steering of Roaming (SOR) may mean that the HPLMN updates a preferred PLMN/access-technology combination in the control plane. The terminal may receive a preferred PLMN/access-technology combination and perform PLMN selection based on the received PLMN/access-technology list. That is, the PLMN priority of the Operator Controlled PLMN Selector with Access Technology may be changed to the received PLMN list.

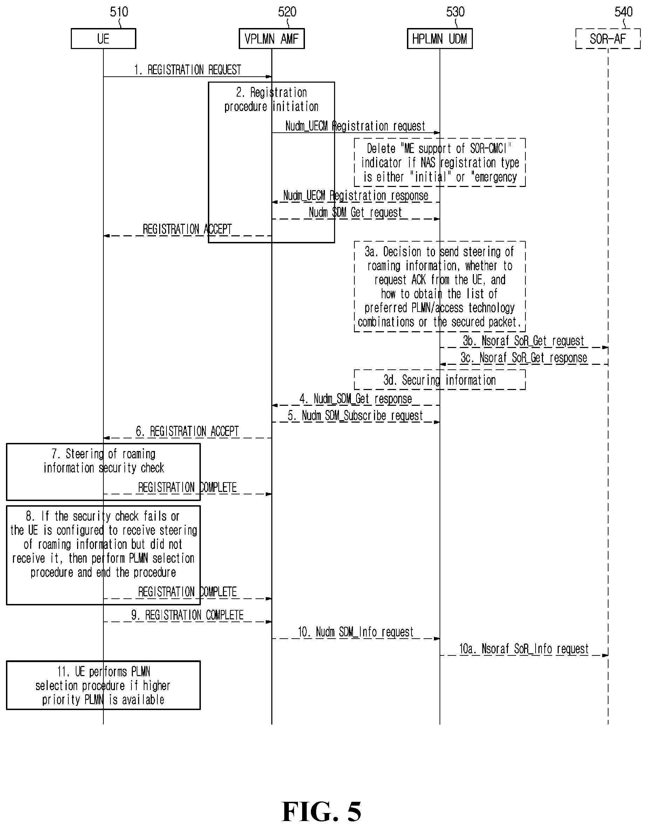

FIG. 5 is a diagram illustrating a method of receiving a PLMN list based on SOR in a process of registering a terminal in a VPLMN applicable to the present disclosure. Referring to FIG. 5, a terminal 510 may transmit a registration request message to a VPLMN AMF 520. The VPLMN AMF 520 may obtain terminal subscription information from an HPLMN UDM 530 and perform a registration procedure. For example, the HPLMN UDM 530 may provide SOR information to the terminal when the terminal is registered in the VPLMN based on an operator's policy. For example, the HPLMN UDM 530 may obtain a list of preferred PLMN/access technology combinations from an SOR-AF 540 and provide the list to the terminal 510. The terminal 510 may perform a PLMN selection with a high priority based on the received SOR information.

FIG. 6 is a diagram illustrating a method of updating a list of preferred PLMN/access technology combinations applicable to the present disclosure. Referring to FIG. 6, a SOR-AF 640 may transmit an update request message (e.g., Nudm_ParameterProvision_Update_request) to an HPLMN UDM 630 to update a list of preferred PLMN/access technology combinations of a terminal. Thereafter, the HPLMN UDM 630 may forward information (e.g., Nudm_SDM_Notification request) indicating a user profile change to an AMF 620. Here, the information indicating the user profile change may include the above-described SOR information, and the AMF 620 may forward the corresponding information to the terminal 610 through NAS signaling. At this time, the terminal performs a security check on the SOR information, confirms that the SOR information is transmitted from the HPLMN, and transmits a response to the AMF 620 through NAS signaling. Here, if the SOR information includes a list of preferred PLMN/access technology combinations of the terminal described above, the terminal may recognize the priority of PLMN selection based on the information.

In addition, for example, based on a request from the NAS of the terminal, the AS of the terminal may search for available PLMNs and report the information to the NAS. For example, the terminal may select a PLMN based on PLMN priority information, find a suitable cell within the PLMN, and camp on it. At this time, for example, with regard to cell selection, the terminal successfully searches for a cell, decodes the MIB (master information block) and the SIB (system information block), and performs cell selection when the condition of Equation 1 below is satisfied, and Srxlev and Squal of Equation 1 may be as shown in Equations 2 and 3 below.

[Equation 1]

$$\text{Srxlev} > 0 \text{ AND Squal} > 0$$

[Equation 2]

$$\text{Srxlev} = Q_{rxlevmeas} - (Q_{rxlevmin} + Q_{rxlevminoffset}) - \text{Pcompensation} - \text{Qoffset}_{temp}$$

[Equation 3]

$$\text{Squal} = Q_{qualmeas} - (Q_{qualmin} + Q_{qualminoffset}) - \text{Qoffset}_{temp}$$

In addition, the configuration of each of Equations 1 to 3 may be as shown in Table 1 below.

[Table 1]

| Srxlev | Cell selection RX level value (dB) |
|---|---|
| Squal | Cell selection quality value (dB) |
| $Qoffset_{temp}$ | Offset temporarily applied to a cell as specified in TS 36.331 [3] (dB) |
| $Q_{rxlevmeas}$ | Measured cell RX level value (RSRP) |
| $Q_{qualmeas}$ | Measured cell quality value (RSRQ) |
| $Q_{rxlevmin}$ | Minimum required RX level in the cell (dBm). $Q_{rxlevmin}$ is obtained from *q-RxLevMin* in SIB1, SIB3, SIB5, or NR SIB5.<br>When the UE who is camped on a NR cell is evaluating an E-UTRA cell, if $Q_{rxlevminoffsetcell}$ is signalled in NR SIB5 in TS 38.331 [37] for the E-UTRA cell, this cell specific offset is added to *q-RxLevMin* to achieve the required minimum RX level in the E-UTRA cell. |
| $Q_{qualmin}$ | Minimum required quality level in the cell (dB) When the UE who is camped on a NR cell is evaluating an E-UTRA cell, if $Q_{qualminoffsetcell}$ is signalled in NR SIB5 in TS 38.331 [37] for the E-UTRA cell, this cell specific offset is added to achieve the required minimum quality level in the E-UTRA cell. |
| $Q_{rxlevminoffset}$ | Offset to the signalled $Q_{rxlevmin}$ taken into account in the Srxlev evaluation as a result of a periodic search for a higher priority PLMN while camped normally in a VPLMN TS 23.122 [5] |
| $O_{qualminoffset}$ | Offset to the signalled $Q_{qualmin}$ taken into account in the Squal evaluation as a result of a periodic search for a higher priority PLMN while camped normally in a VPLMN TS 23.122 [5] |
| Pcompensation | If the UE supports the *additionalPmax* in the *NS-PmaxList,* if present, in SIB1, SIB3 and SIB5:<br>$max(P_{EMAX1} - P_{PowerClass}, 0) - (min(P_{EMAX2}, P_{PowerClass}) - min(P_{EMAX1}, P_{PowerClass}))$ (dB);<br>else:<br>if $P_{PowerClass}$ is 14 dBm:<br>$max(P_{EMAX1} - (P_{PowerClass} - Poffset), 0)$ (dB);<br>else:<br>$max(P_{EMAX1} - P_{PowerClass}, 0)$ (dB)<br>For IAB-MT, $P_{compensation}$ is set to 0. |
| $P_{EMAX1}$, $P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList* respectively in SIB1, SIB3 and SIB5 as specified in TS 36.331 [3]. |
| $P_{PowerClass}$ | Maximum RF output power of the UE (dBm) according to the UE power class as defined in TS 36.101 [33] |

In addition, as an example, in relation to NB (narrowband) IoT, cell selection may be performed if the condition of Equation 4 below is satisfied, and Srxlev and Squal of Equation 4 may be as shown in Equations 5 and 6 below.
[Equation 4]

$$Srxlev > 0 \text{ AND } Squal > 0$$

[Equation 5]

$$Srxlev = Q_{rxlevmeas} - Q_{rxlevmin} - Pcompensation - Qoffset_{temp}$$

[Equation 6]

$$Squal = Q_{qualmeas} - Q_{qualmin} - Qoffset_{temp}$$

In addition, the configuration of each of Equations 4 to 6 may be as shown in Table 2 below.

[Table 2]

| Srxlev | Cell selection RX level value (dB) |
|---|---|
| Squal | Cell selection quality value (dB) |
| Qoffsettemp | Offset temporarily applied to a cell as specified in TS 36.331 [3] (dB) |
| Qrxlevmeas | Measured cell RX level value (RSRP)<br>If RSRP is measured on non-anchor carrier of the cell, the measured RSRP value is translated to Qrxlevmeas as below. Qrxlevmeas = QrxlevmeasNonAnchor - nrs-PowerOffsetNonAnchor.<br>Where QrxlevmeasNonAnchor is the Measured RX level (RSRP) of the non-anchor carrier. |
| Qqualmeas | Measured cell quality value (RSRQ) |
| Qrxlevmin | Minimum required RX level in the cell (dBm) If UE is not authorized for enhanced coverage and Qoffsetauthorization is valid then Qrxlevmin = Qrxlevmin + Qoffsetauthorization. |
| Qqualmin | Minimum required quality level in the cell (dB) |
| Pcompensation | If the UE supports the additionalPmax in the NS-PmaxList-NB, if present, in SIB1-NB, SIB3-NB and SIB5-NB:<br>max(PEMAX1 -PPowerClass, 0) - (min(PEMAX2, PPowerClass) - min(PEMAX1, PPowerClass)) (dB);<br>else:<br>if PPowerClass is 14 dBm:<br>max(PEMAX1 -(PPowerClass - Poffset), 0) (dB);<br>else:<br>max(PEMAX1 -PPowerClass, 0) (dB) |
| PEMAX1, PEMAX2 | Maximum TX power level an UE may use when transmitting on the uplink in the cell (dBm) defined as PEMAX in TS 36.101 [33]. PEMAX1 and PEMAX2 are obtained from the p-Max and the NS-PmaxList-NB respectively in SIB1-NB, SIB3-NB and SIB5-NB as specified in TS 36.331 [3]. |
| PPowerClass | Maximum RF output power of the UE (dBm) according to the UE power class as defined in TS 36.101 [33] |
| Srxlev | Cell selection RX level value (dB) |
| Squal | Cell selection quality value (dB) |
| Qoffsef$_{temp}$ | Offset temporarily applied to a cell as specified in TS 36.331 [3] (dB) |
| Q$_{rxlevmeas}$ | Measured cell RX level value (RSRP)<br>If RSRP is measured on non-anchor carrier of the cell, the measured RSRP value is translated to Q$_{rxlevmeas}$ as below.<br>Q$_{rxlevmeas}$ = Q$_{rxlevmeasNonAnchor}$ - *nrs-PowerOffsetNonAnchor.*<br>Where Q$_{rxlevmeasNonAnchor}$ is the Measured RX level (RSRP) of the non-anchor carrier. |
| Q$_{qualmeas}$ | Measured cell quality value (RSRQ) |
| Q$_{rxlevmin}$ | Minimum required RX level in the cell (dBm) |

(continued)

| | If UE is not authorized for enhanced coverage and Qoffset$_{authorization}$ is valid then $Q_{rxlevmin} = Q_{rxlevmin} + Qoffset_{authorization}$. |
|---|---|
| $Q_{qualmin}$ | Minimum required quality level in the cell (dB) |
| Pcompensation | If the UE supports the *additionalPmax* in the *NS-PmaxList-NB,* if present, in SIB1-NB, SIB3-NB and SIB5-NB: $\max(P_{EMAX1} - P_{PowerClass}, 0) - (\min(P_{EMAX2}, P_{PowerClass}) - \min(P_{EMAX1}, P_{PowerClass}))$ (dB); else: if $P_{PowerClass}$ is 14 dBm: $\max(P_{EMAX1} - (P_{PowerClass} - Poffset), 0)$ (dB); else: $\max(P_{EMAX1} - P_{PowerClass}, 0)$ (dB) |
| $P_{EMAX1}$, $P_{EMAX2}$ | Maximum TX power level an UE may use when transmitting on the uplink in the cell (dBm) defined as $P_{EMAX}$ in TS 36.101 [33]. $P_{EMAX1}$ and $P_{EMAX2}$ are obtained from the *p-Max* and the *NS-PmaxList-NB* respectively in SIB1-NB, SIB3-NB and SIB5-NB as specified in TS 36.331 [3]. |
| $P_{PowerClass}$ | Maximum RF output power of the UE (dBm) according to the UE power class as defined in TS 36.101 [33] |

In addition, as an example, the terminal may consider a case where a problem occurs in Tx transmission. As an example, a T300 timer may be driven based on terminal Tx transmission. The terminal may drive the timer when transmitting an RRC connection request message, and may stop the timer when receiving an RRC connection establishment message as network configuration information. Here, the T300 timer may be driven, and if the terminal does not receive an RRC connection establishment message from the network, the timer may expire.

At this time, if the terminal is an NB IoT terminal and the terminal receives an offset temp related parameter (e.g., connEstFailOffset) in a system information block for NB IoT, the terminal may use the corresponding value for the Qoffsettemp described above during the cell selection and reselection process. On the other hand, if the terminal does not receive the above-described parameter, the above-described $Qoffset_{temp}$ may be set to an infinite value. That is, if a problem occurs in Tx transmission due to expiration of the above-described timer, the terminal may set a cell selection criterion by considering the above-described $Qoffset_{temp}$, but may not be limited thereto.

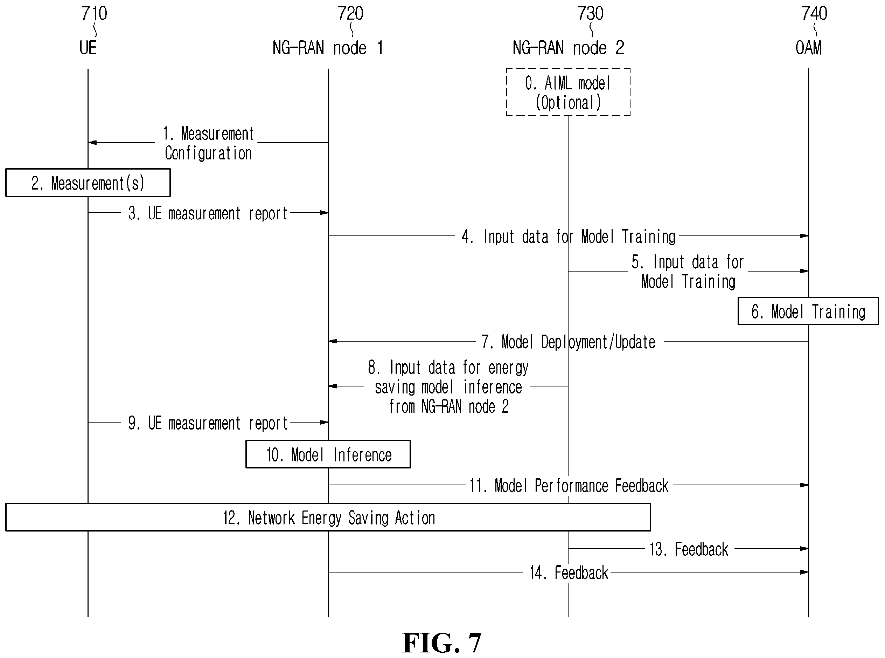

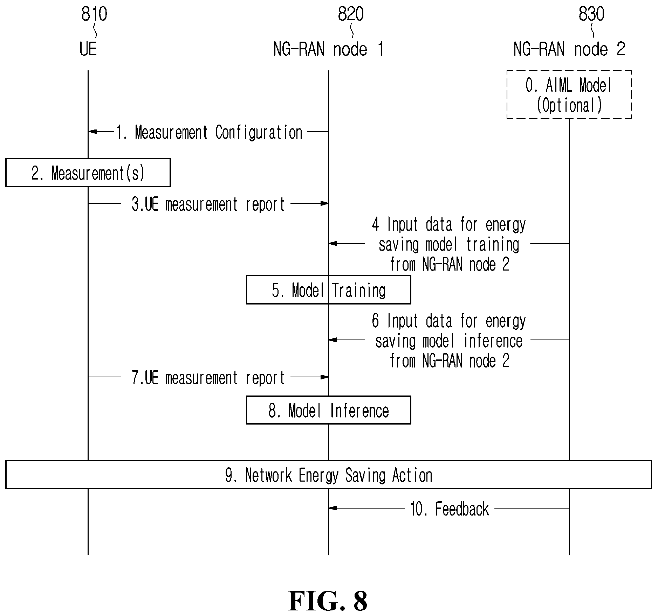

FIG. 7 and FIG. 8 may be operations based on an AI/ML model applicable to the present disclosure. For example, an AI/ML (artificial intelligence/machine learning) model may be applied to collect measurement information of a terminal and cell information where measurement was performed, which will be described later. For example, an AI/ML function may be configured based on an AI/ML model configured according to an AI/ML algorithm. Specifically, data may be provided as input data for model training and model inference. For example, the input data may be measurement information and cell information where measurement was performed, and the input data is not limited to a specific embodiment. Here, training data provided to model training may be data provided for an AI/ML model training function. In addition, inference data provided to model inference may be data provided for an AI/ML model inference function. Model training may be an entity that performs training, validation, and testing of an AI/ML model, thereby providing performance metrics for the AI/ML model. Model training may provide and update AI/ML models to model inference, and model inference may provide model performance feedback to model training. That is, model training may perform training on an AI/ML model through feedback from model inference, and provide an updated AI/ML model again to model inference. In addition, model inference may receive inference data, and generate and provide output through the received AI/ML model. That is, data for learning (or training) on an AI/ML model is provided, an AI/ML model is learned and built, and inference data is provided to the built AI/ML model and output, so that an AI/ML model-based operation may be performed.

As a specific example, referring to FIG. 7, a terminal 710 may receive a measurement configuration from a NG-RAN node 1 720 and perform a measurement. Thereafter, the terminal may perform a measurement report to the NG-RAN node 1 720, and the NG-RAN node 1 720 may provide input information for model training to an OAM 740. As another example, the NG-RAN node 2 730 may also provide input information for model training to the OAM 740, and is not limited to a specific embodiment. Thereafter, training may be performed in the equipped model training of the OAM 740, and result information may be provided to the NG-RAN node 1 720. Here, model inference may be equipped in the NG-RAN node 1 720, and the model inference may be performed to collect and obtain result information.

As another example, referring to FIG. 8, a model training function and a model inference function may be provided in a mode NG-RAN node 1 820. The NG-RAN node 1 820 may provide a measurement configuration to a terminal 810 and obtain a measurement report. In addition, the NG-RAN node 1 820 may obtain input data from another NG-RAN node 830, perform model inference, and collect and obtain result information. As an example, based on FIGS. 7 and 8, measurement information of a terminal and cell information where measurement was performed may be provided as input data for AI/ML model training, and information output through model inference may be utilized, which will be described later.

For example, when a terminal performs PLMN selection, the terminal may select a PLMN with a high priority. The priorities may be in the order of HPLMN, equivalent HPLMN, user PLMN, and other PLMN. After the terminal performs PLMN selection, the terminal may find a suitable cell in the selected PLMN and camp on it. For example, a case where the signal quality of the HPLMN is poor and the signal quality of the other PLMN is good may be considered. In the above-described situation, the terminal may select the HPLMN based on the priority, but the connection may not be smooth because the signal quality of the HPLMN is poor. Here, the existing terminal may be a terminal with mobility, and may perform PLMN selection by moving to a cell with good quality based on the movement of the terminal, so that smooth communication may be performed through another cell in the above-described situation.

On the other hand, a stationary terminal (e.g., stationary IoT terminal) may have problems in the above-described situation because they do not have mobility. As a specific example, the stationary terminal may be a stationary IoT (internet of things) terminal. As another example, the stationary UE may be a sensor node. In other words, the stationary terminal may be a terminal that does not move and is fixed to a specific location. As an example, as a water level measurement of a high tide warning network, a temperature measurement of a high-voltage line, a power measurement, a water measurement device, and other devices, the stationary terminal may be installed and used in a place that is not easily accessible or deep inside a room.

Here, for example, it may be difficult to meet local coverage conditions for an area where a stationary terminal is installed. As a specific example, a SIM used for a stationary terminal may be a global SIM and may be used in multiple countries. Here, the installed stationary terminal may be deployed in a country other than the SIM in which the module is provided. In this case, it may be advantageous for the stationary terminal to select other PLMNs with better signal quality than HPLMNs with poor signal quality, but the terminal may select HPLMN based on PLMN priorities stored in the SIM. In the above-described case, the stationary terminal may not be able to perform smooth communication.

Considering the above-described points, a signal level-based network selection may be performed for a stationary terminal.

Specifically, an operator controlled signal threshold per access technology may be stored in a Universal Subscriber Identity Module (USIM). For example, a stationary terminal may select a PLMN that may access a cell with a better signal quality than the signal level based on the operator controlled signal threshold per access technology even in the case of a PLMN with a high priority.

For example, the following description is based on a stationary IoT terminal, but may not be limited thereto. For example, the description may also be applicable to other types of IoT terminals or mobile terminals, but for convenience of explanation, the following description is based on a stationary IoT terminal.

When a stationary IoT terminal (e.g., a stationary IoT terminal) receives a signal from a PLMN with an unexpectedly high priority, the NAS of the stationary IoT terminal may select a cell by selecting the PLMN based on the priority even when the signal strength is weak enough to not allow data transmission. In other words, the stationary IoT terminal may not select the PLMN it wants to connect to, and may select a PLMN with a low signal strength and a high priority. In the above case, the stationary IoT terminal may not be able to perform actual data transmission due to the low signal strength and may experience frequent signal connection release.

In addition, as an example, even if a stationary IoT terminal selects a PLMN, it may select a PLMN with a lower signal strength and a higher priority again depending on the operation of the terminal NAS that periodically performs higher priority PLMN selection. Accordingly, the stationary IoT terminal may not perform actual data transmission normally, and continuous ping-pong may occur. Considering the above-described problem, an operator controlled signal threshold per access technology (hereinafter, "signal threshold") may be used to allow the stationary IoT terminal to select another PLMN even if a high-priority HPLMN exists. In other words, the stationary IoT terminal may be made to select a PLMN with a higher signal strength than the signal threshold.

Here, as an example, the terminal may select a PLMN based on priority from among PLMNs having a received signal quality of the candidate PLMN/access technology combination greater than or equal to a signal strength of a signal threshold as a value measured by the terminal for all PLMNs, regardless of whether there is a high-priority PLMN.

That is, when the terminal performs PLMN selection, the terminal may select a PLMN based on a signal threshold. Specifically, the terminal may perform PLMN selection based on a priority among PLMNs corresponding to cells satisfying Equation 7 below. Here, the $Thresh_{operator}$ value may be determined to be a value between a cell selection criterion value and a high quality signal (-110 dBm). That is, the $Thresh_{operator}$ value may be a criterion of a candidate cell for which cell selection is possible based on cell selection criteria, and PLMN selection may be performed based on a priority among PLMNs corresponding to cells satisfying Equation 7 below.

$Q_{rxlevmeas}$ (the target PLMN's access technology signal quality) >= $Thresh_{operator}$ (operator controlled signal threshold per access technology) where, the cell selection criteria is $S_{rxlev} > 0$, and $S_{rxlev}$ may be as shown in Equation 8 below.

[Equation 8]

$$S_{rxlev} = Q_{rxlevmeas} - Q_{rxlevmin} - Pcompensation - Q_{offsettemp}$$

The cell measure value $Q_{rxlevmeas}$ of the terminal is a signal strength value measured in dBm scale, and a high quality signal may also be an actual measured signal strength value of -110 dBm. Here, since the case where the cell selection criterion value is $S_{rxlev} > 0$ is not expressed in dBm scale, the case of Equation 9 below may be considered.

[Equation 9]

$$Q_{rxlevmin} + P_{compensation} + Q_{offsettemp} < Thresh_{operator} < High\ quality\ signal$$

$$(-110\ dBm)$$

That is, the operator needs to consider $Q_{rxlevmin}$, $P_{compensation}$, and $Q_{offsettemp}$ values when indicating a $Thresh_{operator}$ value to the terminal. At this time, a signal threshold with $S_{rxlevmin} > 0$ may be indicated to satisfy the cell selection criteria S.

Here, as an example, the signal threshold may be determined by considering the minimum threshold value (Qrxlevmin) of Equation 9 in order to exclude selection of a PLMN corresponding to a cell having too low signal quality. In addition, as an example, the signal threshold may consider $Q_{offsettemp}$ in order to exclude selection of a PLMN corresponding to a cell having too high signal quality, which will be described later.

As a specific example, the reason why a stationary IoT terminal may camp on a wrong cell may be because it camps on a wrong cell with a low signal quality and a high priority. As another example, a stationary IoT terminal may camp on a wrong cell with an unexpectedly significantly high signal quality. As a specific example, a signal received by a terminal may be composed of a directly delivered signal and a reflected wave that is reflected and received by a different standard. In other words, a signal received by a terminal (Received Strength Indicator, RSSI) may be determined to be a sum of the direct wave and the reflected wave. Here, as an example, a stationary IoT terminal may camp on a cell with an abnormally high signal strength from a cell located far away. As a specific example, in an environment such as a beach or a lake, a reflected wave with an abnormally strong signal for a cell located far away may be received based on the reflected wave, and thus connection to a wrong cell located far away may be established.

That is, in order to avoid camping on a wrong cell, it is necessary to consider $Q_{offsettemp}$ applicable based on Tx transmission failure as a cell selection criterion. That is, a signal threshold may be set to prevent camping on a wrong cell due to high signal quality. Considering the above-described points, a two-step threshold or a single threshold may be used, which are described below.

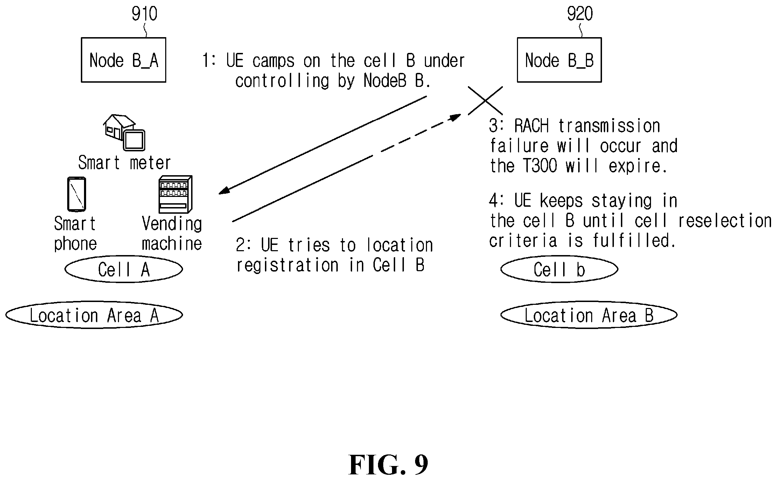

FIG. 9 is a diagram illustrating a case where camping is performed on a wrong cell applicable to the present disclosure. For example, a terminal may access a cell located far away, and in this case, a case where a problem occurs in Tx transmission may be considered. The terminal may drive a T300 timer based on Tx transmission. Specifically, the terminal may drive the timer when transmitting an RRC connection request message, and may stop the timer when receiving an RRC connection establishment message as network configuration information. Here, the T300 timer may be driven and the timer may expire when the terminal does not receive an RRC connection establishment message from the network. At this time, as an example, the terminal may increase the Tx power through ramping when Tx transmission fails. That is, when the terminal does not continuously receive a response from the network, the Tx transmission power may be increased.

Specifically, referring to FIG. 9, although it may be suitable for the terminal to camp on a cell A based on node B_A 910, registration may be attempted by selecting a cell B based on node B_B 920. At this time, node B_B 920 may be an unsuitable cell for the terminal to camp on, and the Tx transmission of the terminal may fail. Therefore, a RACH transmission failure may occur during the process in which the terminal attempts to register in the cell B, and the T300 timer may expire. Here, the terminal may remain on cell B until a cell reselection criterion is satisfied, and may not be able to select a suitable cell based on this. That is, the signal strength of the cell B of node B_B 920 is abnormally high, and the PLMN selection priority of the corresponding cell is high, so that the terminal may camp on a wrong cell. Considering the above-described points, it may be considered to use a two-step threshold, which will be described below.

For example, a first network node may determine whether the terminal is a stationary IoT terminal to determine whether a signal threshold is used. The first network node may determine whether the terminal is a stationary IoT terminal by determining whether the RAT type of the terminal is NB (narrowband) IoT. As another example, the first network node may determine whether the terminal is a stationary IoT terminal through the subscription information of the terminal. If the terminal is a stationary IoT terminal, the first network node may subscribe to a service that requests analytical information of the terminal by considering the signal threshold. For example, the first network node may be AMF or OAM (Operation, Administration, and Maintenance), but may not be limited to a specific node.

A second network node may collect and analyze related information to set a signal threshold, and determine whether to use a signal threshold. That is, the second network node may be a node having an analytic function. As a specific example, the second network node may be a Network Data Analytics Function (NWDAF). As another example, the second network node may be a base station, and may have a data analytic function at the base station level, but is not limited to a specific embodiment. As another example, the analytic function may be a RAN node or network node having AI/ML, but is not limited to a specific embodiment.

For example, the second network node may control the terminal to select a PLMN having signal quality higher than a preset value. The second network node may determine a signal threshold to the preset value of the signal quality and indicate it to the terminal. For the above-described operation, the second network node may collect cell signal quality measurement information of the terminal and information about the cell where the measurement was performed. Here, as an example, the second network node may perform an analysis based on the measurement information collected from the terminal or another network node and the information about the cell where the measurement was performed, and first determine whether to use the signal threshold. Upon determining to use the signal threshold, the second network node may perform an analysis based on the measurement information collected from the terminal or another network node and the information about the cell where the measurement was performed, and determine the signal threshold.

As another example, whether to use a signal threshold and the signal threshold may be determined based on a third network node. As an example, the third network node may be a Steering Of Roaming Application Function (SOR-AF), but may not be limited thereto. Here, as an example, the third network node may instruct a terminal to collect measurement information for the signal threshold, and collect the measurement information and cell information where the measurement was performed from the terminal. As an example, the third network node may determine whether to use a signal threshold based on the collected information. As another example, the third network node may determine a signal threshold or change a predetermined signal threshold based on the collected information.

As a specific example, the third network node may instruct the terminal to perform measurement by considering the location information of the terminal, and may obtain measurement information and information on the cell where the measurement was performed. As an example, the third network node may obtain at least one of the frequency of the cell where the measurement was performed, the cell ID, the cell measurement result (e.g., RSRP, RSCP), the Srxlev or Squal of the cell calculated by the terminal, Qrxlevmin, Qqualmin or Qoffsettemp received by the terminal, PLMN ID, or priority information. The third network node may determine whether to use a signal threshold and the signal threshold itself based on the above-described information. Thereafter, the third network node may deliver the determined threshold to the terminal. As another example, the third network node may deliver the threshold to the fourth network node, and the fourth network node may deliver the threshold to the terminal. As an example, the fourth network node may be a UPF (user plane function), but may not be limited thereto.

When the operator controlled signal threshold per access technology (hereinafter referred to as signal threshold) described above is used and the terminal receives the signal threshold, the terminal may perform PLMN selection within a PLMN higher than the signal threshold. In other words, the terminal may exclude a signal lower than the signal threshold from the selected PLMN even if it is a PLMN with a high priority. As a specific example, a case where the terminal performs frequent connection release or frequent mobility registration may be considered. For example, when the terminal performs connection release or mobility registration more than a preset number of times (e.g., VPLMN from/to higher priority PLMN: HPLMN, EHPLMN, UPLMN, OPLMN), the analytic function node may obtain measurement information of a PLMN with a higher priority than the registered current PLMN for a preset period of time. That is, the analytic function node may analyze the measured signal quality of the terminal of the PLMN having a higher priority than the current PLMN and the cell information where the measurement was performed. Here, the analytic function node may determine whether the PLMN satisfies the cell selection criteria (S criteria) by using the signal quality of the cell of the PLMN having a higher priority than the current PLMN for a preset period of time. For example, if the PLMN does not satisfy the cell selection criteria based on the signal quality of the cell of the PLMN having a higher priority than the current PLMN for a preset period of time, the analytic function node may configure a signal threshold for the terminal. Here, the configured signal threshold may be a value that makes the cell selection criteria (S criteria) become 0. As another example, the configured signal threshold may be defined as a limit value of the signal quality or a signal quality that becomes a preset value.

For example, a third network node (e.g., SOR-AF) may obtain measurement information and cell information where measurement was performed from the terminal, as described above. Here, when the third network node obtains measurement information and cell information where measurement was performed, the third network node may also obtain location information of the terminal. Here, the third network node may determine and transmit a different signal threshold for each terminal based on the location information of the terminal. As another example, when the terminal is a stationary IoT terminal, the third network node may recognize the location of the terminal during the process of the terminal performing registration, and may determine and deliver a signal threshold to the terminal based on the location information recognized in advance without receiving the location information from the terminal.

As another example, the operator may determine whether to use a two-step threshold or a single threshold. As an example, whether to use a two-step threshold may be determined based on the third network node. As a specific example, when using a PLMN of a cell that uses a connection establishment failure offset function, the operator may use the two-step threshold. On the other hand, when using a PLMN of a cell that does not use a connection establishment failure offset function, the operator may use a single signal threshold. In this case, when two signal thresholds are indicated to the terminal based on signal level-based selection, the third network node (e.g., SOR-AF) may indicate two signal thresholds to the terminal. As another example, the third network node may indicate one signal threshold to the terminal. Here, the terminal may directly obtain another signal threshold based on one signal threshold received.

Here, as an example, a first signal threshold indicated by the operator to the terminal may be used to not select a PLMN of a cell having a low signal strength but a high priority. That is, the terminal may select a PLMN having a high priority among PLMNs having a signal strength higher than the first signal threshold. In addition, as an example, the second signal threshold may be a second signal threshold signaled from the operator to the terminal or a signal threshold calculated by the terminal. Here, a second signal threshold may be a signal threshold that is applied to the terminal when a signal having an unexpected high quality is received. As an example, when the operator indicates only one signal threshold to the terminal, the terminal may obtain the second signal threshold by adding the received signal threshold and $Q_{offsettemp}$.

As another example, if a terminal receives two signal thresholds from a third network node (e.g., SOR-AF), the terminal needs to determine which signal threshold to use. The terminal may perform RSRP and priority-based PLMN selection based on the determined signal threshold.

Specifically, the terminal may use the first signal threshold received from the third network node as the signal threshold to be used by the terminal. For example, the first signal threshold may be a default signal threshold. Here, as an example, if the terminal determine to use $Q_{offsettemp}$, the terminal may determine to use the second signal threshold. More specifically, the terminal may perform data transmission to a cell using the Connection Establishment Failure Offset function, and a timer (e.g., T300) may expire consecutively. Based on consecutive timer expirations, it may be determined to use $Q_{offsettemp}$ in determining cell selection criteria. Here, the AS layer of the terminal may indicate whether to use $Q_{offsettemp}$ to the NAS layer of the terminal. Thereafter, the NAS layer of the terminal may determine to use the second signal threshold, and select a PLMN having a higher priority from among PLMNs having a signal greater than the second signal threshold.

On the other hand, if the terminal performs data transmission to a cell that does not use the Connection Establishment Failure Offset feature, the terminal may determine not to use $Q_{offsettemp}$ in the cell selection criteria based on consecutive timer (e.g., T300) expiration. Here, the AS layer of the terminal may indicate that $Q_{offsettemp}$ is not used to the NAS layer of the terminal. Thereafter, the NAS layer of the terminal may determine to use the first signal threshold and select a PLMN with a higher priority from among PLMNs having a signal greater than the first signal threshold.

For example, when the terminal performs automatic network selection, the terminal may perform PLMN selection based on priority among PLMNs whose signal strengths are greater than a determined signal threshold (e.g., a first signal threshold or a second signal threshold).

In addition, for example, if the terminal periodically selects a PLMN with a high priority, the terminal may camp on the PLMN with the high priority as a target cell if the signal strength of the target cell is greater than a determined signal threshold. On the other hand, for example, if the signal strength of the registered PLMN is less than the determined signal threshold and the signal strength of the target cell is greater than the determined signal threshold, the terminal may select a PLMN with a low priority and attempt to connect to the PLMN.

Based on the above, the terminal may perform PLMN selection. At this time, as an example, the operation of the terminal based on the timer T300 may be as shown in Table 3 below, which is as described above. That is, the terminal may indicate use of $Q_{offsettemp}$ to the higher layer when performing cell selection or reselection based on a cell that uses the Connection Establishment Failure Offset function. Through this, the second signal threshold may be used. On the other hand, the terminal may indicate that $Q_{offsettemp}$ is not used to the higher layer when performing cell selection or reselection based on a cell that does not use the Connection Establishment Failure Offset function. Through this, the first signal threshold may be used.

[Table 3]

| 5.3.3.6 T300 expiry<br>The UE shall: |
| --- |

(continued)

> 1> if timer T300 expires:
>
>    ...
>
>    2> if the UE is a NB-IoT UE:
>
>       3> if *connEstFailOffset* is included in *SystemInformationBlockType2-NB*:
>
>       4> use *connEstFailOffset* for the parameter Qoffset$_{temp}$ for the concerned cell when performing cell selection and reselection according to TS 36.304 [4];
>
>       4> inform upper layers about use of Qoffset$_{temp}$ for the concerned cell when performing cell selection and reselection according to TS 36.304 [4];
>
>       3> else:
>
>       4> use value of infinity for the parameter Qoffset$_{temp}$ for the concerned cell when performing cell selection and reselection according to TS 36.304 [4];
>
>       4> inform upper layers about not to use of Qoffset$_{temp}$ for the concerned cell when performing cell selection and reselection according to TS 36.304 [4];
>
>       NOTE 0: For NB-IoT, the number of times that the UE detects T300 expiry on the same cell before applying connEstFailOffset and the amount of time that the UE applies connEstFailOffset before removing the offset from evaluation of the cell is up to UE implementation.

Also, referring to Table 4, one signal threshold (Operator Controlled Signal Threshold per Access Technology) described above may be set for the terminal. Alternatively, two signal thresholds (Operator Controlled Signal Threshold per Access Technology) described above may be set for the terminal. Here, the first signal threshold is determined to be a default signal threshold, and the second signal threshold may be determined based on whether $Q_{offsettemp}$ is used, as described above.

[Table 4]

> **3.x Signal level enhanced network selection**
>
> For the MS that only supports any of the following or a combination of : EC-GSM-IoT, Category M1 or Category NB1 (as defined in 3GPP TS 36.306 [54]), the 5G system shall support a mechanism to have one or two Operator controlled signal threshold per access technology on the USIM to be used for network selection. The signal threshold is specific for a certain Access Technology and shall apply to all PLMNs with the corresponding access technology combinations.
>
> NOTE 1: The use of the Operator controlled signal threshold per access technology is intended for IoT stationary devices, without user interaction.
>
> NOTE 2: The allowed range of the Operator controlled signal threshold per access technology is between the cell selection criterion and the high quality signal.
>
> The UE shall utilise all the information stored in the USIM related to network selection, e.g. HPLMN, Operator controlled PLMN Selector list, User Controlled PLMN Selector list, Forbidden PLMN list, Operator controlled signal threshold.
>
> **3.x.1 Determination of Operator controlled signal threshold**
>
> If one "Operator Controlled Signal Threshold per Access Technology" is/are stored in the SIM, the UE shall set determined "Operator Controlled Signal Threshold per Access Technology" as "Operator Controlled Signal Threshold per Access Technology" stored in the SIM.
>
> If "Operator Controlled Signal Threshold 1 per Access Technology" and "Operator Controlled Signal Threshold 2 per Access Technology" are stored in the SIM, the UE shall set determined "Operator Controlled Signal Threshold per Access Technology" as
>
> "Operator Controlled Signal Threshold 1 per Access Technology" as a default.
>
> "Operator Controlled Signal Threshold 2 per Access Technology" if the lower layers indicate use of Qoffsettemp for the concerned cell when performing cell selection and reselection according to TS 36.304 [4];
>
> "Operator Controlled Signal Threshold 1 per Access Technology" if the lower layers indicate no use of Qoffsettemp for the concerned cell when performing cell selection and reselection according to TS 36.304 [4];

Also, as an example, referring to Table 5, the 5G system may support the use of one signal threshold or two signal thresholds with respect to network selection, as described above.

[Table 5]

| 3.x | Signal level enhanced network selection |
|---|---|
| | For the MS that only supports any of the following or a combination of : EC-GSM-IoT, Category M1 or Category NB1 (as defined in 3GPP TS 36.306 [54]), the 5G system shall support a mechanism to have one or two Operator controlled signal threshold per access technology on the USIM to be used for network selection. The signal threshold is specific for a certain Access Technology and shall apply to all PLMNs with the corresponding access technology combinations. |
| | NOTE 1: The use of the Operator controlled signal threshold per access technology is intended for IoT stationary devices, without user interaction. |
| | NOTE 2: The allowed range of the Operator controlled signal threshold per access technology is between the cell selection criterion and the high quality signal. |
| | The UE shall utilise all the information stored in the USIM related to network selection, e.g. HPLMN, Operator controlled PLMN Selector list, User Controlled PLMN Selector list, Forbidden PLMN list, Operator controlled signal threshold. |

Also, as an example, referring to Table 6, one signal threshold or two signal thresholds may be stored in the SIM, and the terminal may select a PLMN with a higher priority among PLMNs having a signal higher than the determined signal threshold when performing PLMN selection in the candidate PLMN/access technology, as described above.

[Table 6]

| 4.4.3.1.1 Automatic Network Selection Mode Procedure |
|---|
| The MS selects and attempts registration on other PLMN/access technology combinations, if available and, for bullets i, ii, iii, iv, v, allowable, in the following order: |
| i) either the HPLMN (if the EHPLMN list is not present or is empty) or the highest priority EHPLMN that is available (if the EHPLMN list is present) ; |
| ... |
| When following the above procedure the following requirements apply: |
| ... |
| v) In i to v, if one or two "Operator Controlled Signal Threshold per Access Technology" is/are stored in the SIM, the MS shall not consider PLMNs where the received signal quality of the candidate PLMN/access technology combination is lower than determined "Operator controlled signal threshold per access technology"(see subclause 3.x.1) as PLMN selection candidate. If no candidate PLMN/access technology combination fulfils the Operator controlled signal threshold criteria, the UE shall repeat the network selection procedure without applying the Operator controlled signal threshold per access technology. |

Also, as an example, referring to Table 7, when the terminal periodically performs PLMN selection with a high priority, the terminal may select and camp on a PLMN with a high priority as a target cell if the signal strength of the target cell is greater than a determined signal threshold. On the other hand, when the signal strength of the registered PLMN is less than the determined signal threshold and the signal strength of the target cell is greater than the determined signal threshold, the terminal may attempt connection access by selecting a PLMN with a low priority, as described above.

[Table 7]

| 4.4.3.3.1 Automatic and manual network selection modes |
|---|
| 4.4.3.3.1.1 Automatic and manual network selection modes when not registered for disaster roaming services |
| If one or two "Operator Controlled Signal Threshold per Access Technology" is/are set on the SIM, the attempts to access the HPLMN or an EHPLMN or higher priority PLMN or lower priority PLMN shall be as specified below, in the same order as clause 4.4.3.1.1, with following condition: |
| a) The UE shall select a higher priority PLMN/access technology combination if the target PLMN's access technology signal quality is equal to or higher than determined "Operator Controlled Signal Threshold per Access Technology" (see subclause 3.x.1). |

(continued)

> b)The UE shall select a lower priority PLMN/access technology combination if the RPLMN's access technology signal quality is lower than determined "Operator Controlled Signal Threshold per Access Technology"(see subclause 3.x.1), and the target PLMN's access technology signal quality is equal to or higher than determined "Operator Controlled Signal Threshold per Access Technology"(see subclause 3.x.1).

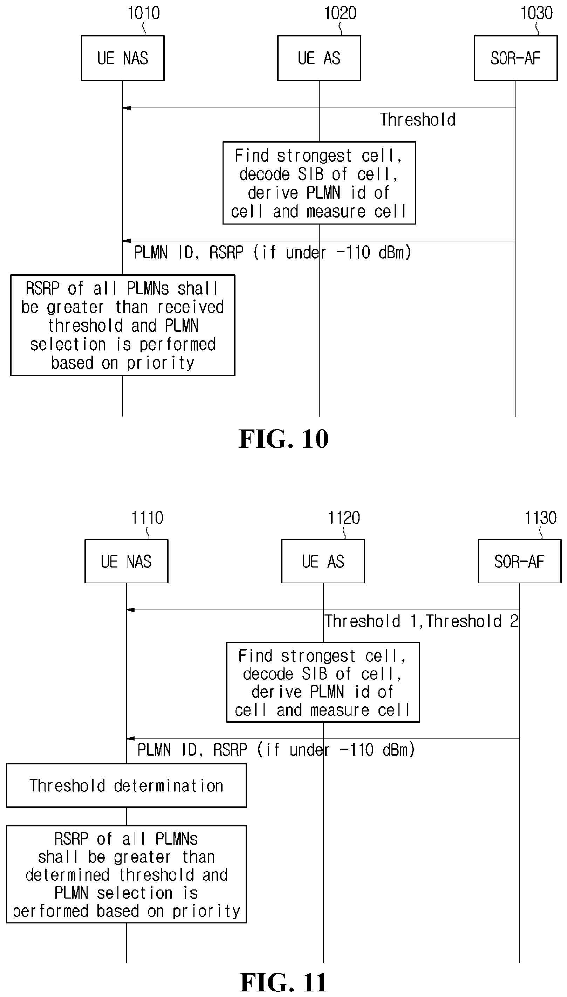

FIG. 10 is a diagram showing a signal threshold determination method applicable to the present disclosure. Referring to FIG. 10, as described above, it is possible to determine whether to use a signal threshold (Operator Controlled Signal Threshold per Access Technology) at a network control node. As an example, the following description is based on SOR-AF, but may not be limited thereto.

As a specific example, whether to use a signal threshold may be determined by an SOR-AF 1030. In addition, as an example, whether to use the above-described two-step threshold or one threshold may be determined. As another example, the signal threshold may be determined by the SOR-AF 1030. When one signal threshold is used, the SOR-AF 1030 may deliver the used signal threshold to the terminal. On the other hand, when two signal thresholds are used based on the two-step threshold, the SOR-AF 1030 may deliver one signal threshold to the terminal, and the terminal may determine another signal threshold. As an example, the terminal may determine the value obtained by adding the received signal threshold and QOffsettemp as another signal threshold. As another example, the SOR-AF 1030 may deliver two signal thresholds to the terminal, without being limited to a specific embodiment.

For example, referring to FIG. 10, it may be determined that one threshold is used. Here, the NAS 1010 of the terminal may receive a signal threshold from the SOR-AF 1030. Then, the AS 1020 of the terminal may find a cell with the strongest signal (strongest cell), decode the SIB of the cell, and derive the PLMN ID of the cell. The AS 1020 of the terminal may perform measurement on the cell, and deliver the PLMN ID and RSRP to the NAS 1010 of the terminal based on the measurement. Here, the RSRP may be less than -110 dBm. Then, the NAS 1010 of the terminal may perform PLMN selection based on the priority and the RSRP. That is, the NAS 1010 of the terminal may perform PLMN selection based on the priority among the PLMNs having an RSRP greater than the received signal threshold.

FIG. 11 is a diagram illustrating a method of performing PLMN selection of a terminal based on a two-step threshold applicable to the present disclosure. Referring to FIG. 11, there may be a case where a two-step signal threshold is used. For example, a NAS 1010 of the terminal may receive each signal threshold (threshold 1, threshold 2) from an SOR-AF 1030. As another example, the NAS 1010 of the terminal may receive one signal threshold (threshold 1 or default threshold) and obtain another signal threshold (threshold 2) from the SOR-AF 1030. Thereafter, the AS 1120 of the terminal may find a cell with the strongest signal (strongest cell), decode the SIB of the cell and derive the PLMN ID of the cell. The AS 1120 of the terminal may perform measurements on the corresponding cell and deliver the PLMN ID and RSRP to the NAS 1110 of the terminal based on the measurements. Here, the RSRP may be less than -110 dBm.

Here, the NAS 1110 of the terminal may perform a signal threshold determination operation. That is, the NAS 1110 of the terminal may determine a signal threshold to be used among two thresholds. Thereafter, the NAS 1110 of the terminal may perform PLMN selection based on the priority and RSRP. Here, the NAS 1110 of the terminal may perform PLMN selection based on the priority among PLMNs having an RSRP greater than the determined signal threshold.

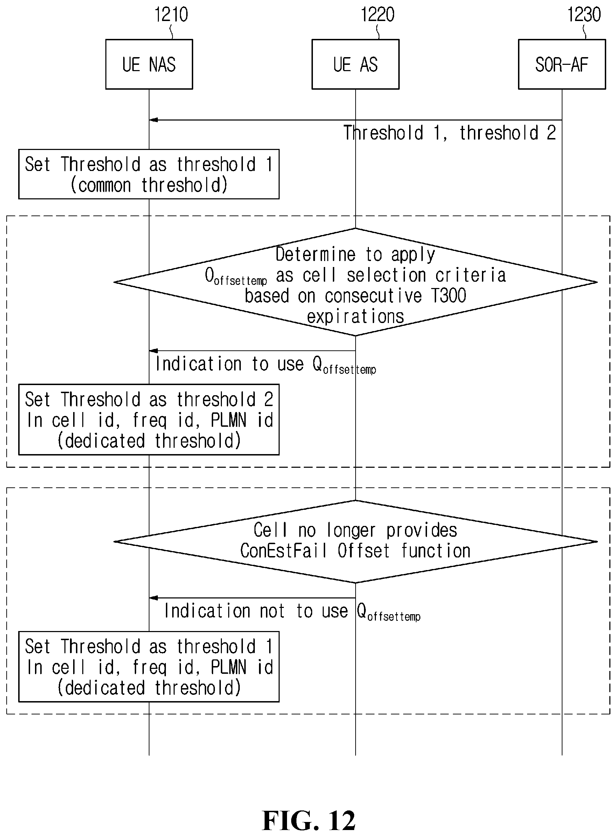

FIG. 12 is a diagram illustrating a method of performing a signal threshold determination operation in a two-step threshold applicable to the present disclosure. Referring to FIG. 12, the NAS 1210 of the terminal may set a first signal threshold among two signal thresholds obtained based on the two-step threshold. Here, the first signal threshold may be a common threshold. That is, the NAS 1210 of the terminal may preferentially set the common threshold among the two received signal thresholds. Thereafter, the AS 1220 of the terminal may determine to apply $Q_{offsettemp}$ as cell selection criteria based on consecutive timer (e.g., T300) expirations, as described above. Upon determining that $Q_{offsettemp}$ is applied, the AS 1220 of the terminal may indicate use of $Q_{offsettemp}$ to the NAS 1210 of the terminal. The NAS 1210 of the terminal may use the second signal threshold when receiving indication to use $Q_{offsettemp}$. That is, the second signal threshold may be a signal threshold used when indicating use of $Q_{offsettemp}$ based on a Tx transmission failure of the terminal. At this time, the terminal may select a PLMN with a higher priority among PLMNs having a signal greater than the second signal threshold.

Here, if the cell does not provide the connection establishment failure offset (connEstFailOffset) function, $Q_{offsettemp}$ may no longer be used. The AS 1220 of the terminal may indicate to the NAS 1210 of the terminal that use of $Q_{offsettemp}$ is stopped. That is, if the cell does not provide the connection establishment failure offset (connEstFailOffset) function, the AS 1220 of the terminal may indicate to the NAS 1210 of the terminal that use of $Q_{offsettemp}$ is stopped. At this time, the NAS 1210 of the terminal may set the first signal threshold as the signal threshold and select a PLMN with a high priority from among PLMNs having a signal greater than the first signal threshold.

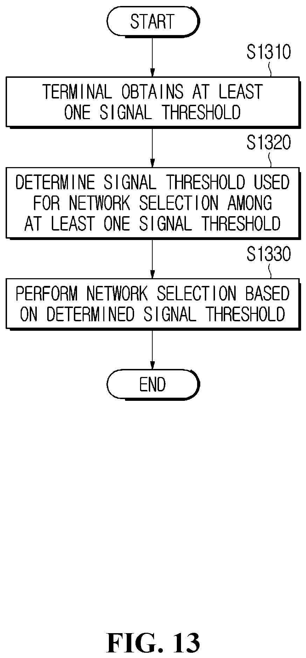

FIG. 13 is a diagram showing a terminal operation applicable to the present disclosure.

Referring to FIG. 13, a terminal may obtain at least one signal threshold (S1310). Then, the terminal may determine a signal threshold used for network selection among at least one signal threshold (S1320) and perform network selection based on the determined signal threshold (S1330). Here, as an example, the signal threshold may be one threshold or a two-step signal threshold. As an example, in a case where the terminal configures two signal thresholds based on a two-step signal threshold, the terminal may determine a first signal threshold among the two signal thresholds as the signal threshold used for network selection when a first value is used as a cell selection criterion value based on consecutive first timer expirations. On the other hand, if the first value is not used as a cell selection criterion value, the terminal may determine a second signal threshold among the two signal thresholds as the signal threshold used for network selection.

Here, as an example, at least one signal threshold is an operator controlled signal threshold per access technology as described above. When the terminal performs network selection based on the determined signal threshold, the terminal may select a network with a higher priority from among networks capable of accessing a cell having a signal quality better than a signal level of the determined signal threshold.

When the terminal performs network selection, an AS (access stratum) of the terminal may decode system information received from a cell with the strongest signal strength to derive a network ID, perform measurement on the cell, and deliver the derived network ID and cell measurement information to a NAS (non-access stratum) of the terminal. The NAS of the terminal may perform network selection by determining a signal threshold. Here, if the cell is a cell providing a connection establishment failure offset function, the AS of the terminal may determine to use a first value as a cell selection criterion value based on consecutive first timer expirations, and may indicate use of the first value to the NAS of the terminal. The NAS of the terminal may determine a signal threshold as the first signal threshold based on the use of the first value.

Also, as an example, if the cell is a cell that does not provide a connection establishment failure offset function, the AS of the terminal may determine not to use the first value as a cell selection criterion value even after consecutive first timer expirations, and may indicate non-use of the first value to the NAS of the terminal. The NAS of the terminal may determine the signal threshold as a second signal threshold based on non-use of the first value.

As another example, only one signal threshold may be configured in the terminal. Here, the terminal may receive the signal threshold from the first network node and perform network selection based on the received signal threshold.

On the other hand, when two signal thresholds are configured in the terminal, the terminal may receive both the two signal thresholds from the first network node. As another example, when two signal thresholds are configured in the terminal, the terminal may receive the second signal threshold and determine the first signal threshold based on the sum of the second signal threshold and the first value. That is, the second threshold may be determined as a default signal threshold. Here, as an example, the first value may be $Q_{offsettemp}$. In addition, it is determined whether the terminal registered in the network is a first type terminal, and when the terminal is a first type terminal, terminal measurement information and measured cell information may be collected to determine whether to use the signal threshold and the signal threshold, and the determined signal threshold may be transmitted to the terminal. As an example, the first type terminal is a stationary IoT (internet of things) terminal, and the node may determine whether the terminal is a first type terminal based on at least one of terminal type indication information and terminal subscription information. Additionally, the first signal threshold may be a signal threshold that excludes selection of a public land mobile network (PLMN) with a high signal quality that is not expected by the terminal, and the second signal threshold may be a signal threshold that excludes selection of a PLMN with a low signal strength and a high priority, as described above.

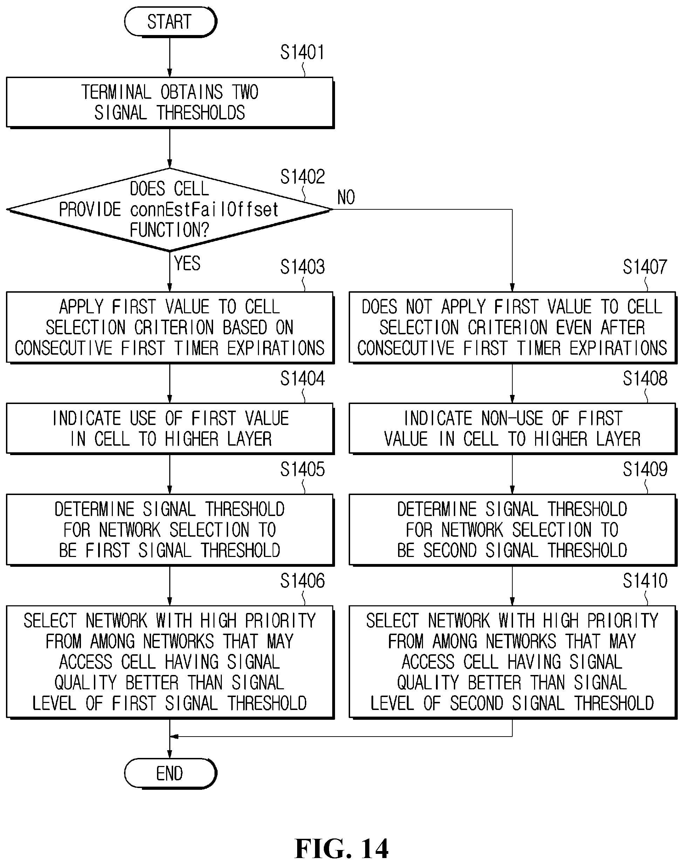

FIG. 14 is a diagram showing a terminal operation based on a two-step threshold applicable to the present disclosure.

Referring to FIG. 14, a terminal may obtain two signal thresholds. (S1401) That is, two signal thresholds may be configured in the terminal based on a two-step threshold. Here, when a cell provides a connection establishment failure offset function (S1402), the terminal may apply a first value to a cell selection criterion based on consecutive first timer expirations (S1403), and indicate use of the first value in the corresponding cell to a higher layer. (S1404) Then, a signal threshold for network selection may be determined to be a first signal threshold. (S1405) That is, the signal threshold may be a signal threshold that considers the first value. The terminal may select a network with a high priority from among networks that may access a cell having a signal quality better than the signal level of the first signal threshold (S1406). On the other hand, if the cell does not provide a connection establishment failure offset function (S1402), the terminal may not apply the first value to the cell selection criterion based on consecutive first timer expirations (S1407) and may indicate non-use of the first value in the corresponding cell to the higher layer (S1408). Thereafter, the signal threshold for network selection may be determined to be a second signal threshold (S1409). The terminal may select a network with a high priority from among the networks that may access the cell having a signal quality better than the signal level of the second signal threshold (S1410).

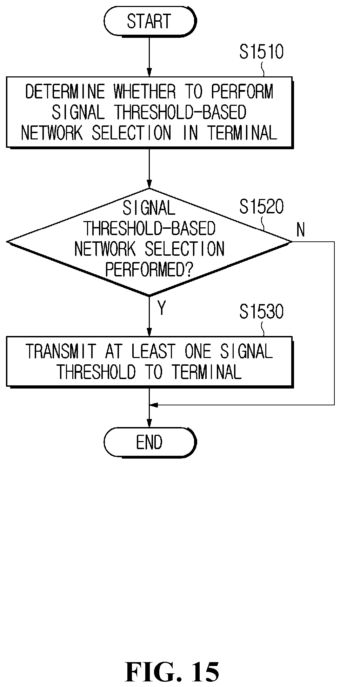

FIG. 15 is a flowchart illustrating a network operation applicable to the present disclosure. A network may determine whether to perform signal threshold-based network selection in a terminal (S1510). Here, if signal threshold-based network selection is performed (S1520), the network may transmit at least one signal threshold. On the other hand, when signal threshold-based network selection is not performed, the terminal may operate in the same manner as before.

Here, as an example, the signal threshold is an operator controlled signal threshold per access technology as described above. When performing signal threshold-based network selection on the terminal, the terminal may select a network with a high priority among the networks that may access the cell having a signal quality better than the signal level of the determined signal threshold.

When the terminal performs network selection, the AS (access stratum) of the terminal may decode system information received from a cell with the strongest signal strength to derive a network ID, perform measurement on the cell, and deliver the derived network ID and cell measurement information to the NAS (non-access stratum) of the terminal. The NAS of the terminal may perform network selection by determining a signal threshold.

In addition, as an example, at least one signal threshold may be configured in the terminal. For example, when two signal thresholds are configured in the terminal based on a two-step threshold, the terminal may perform network selection by determining one of the two signal thresholds.

For example, when the cell is a cell providing a connection establishment failure offset function, the AS of the terminal may determine to use the first value as a cell selection criterion value based on consecutive first timer expirations and indicate use of the first value to the NAS of the terminal. The NAS of the terminal may determine the signal threshold to be a first signal threshold based on the use of the first value.

In addition, for example, when the cell is a cell that does not provide a connection establishment failure offset function, the AS of the terminal may determine not to use the first value as a cell selection criterion value even after consecutive first timer expirations, and may indicate non-use of the first value to the NAS of the terminal. The NAS of the terminal may determine the signal threshold to be a second signal threshold based on non-use of the first value.

As another example, only one signal threshold may be configured in the terminal. Here, the terminal may receive the signal threshold from a first network node and perform network selection based on the received signal threshold.

On the other hand, when two signal thresholds are configured in the terminal, the terminal may receive both signal thresholds from the first network node. As another example, when two signal thresholds are configured in the terminal, the terminal may receive the second signal threshold and determine the first signal threshold based on the sum of the second signal threshold and the first value. That is, the second threshold may be determined as a default signal threshold. Here, as an example, the first value may be $Q_{offsettemp}$. In addition, it is determined whether the terminal registered in the network is a first type terminal, and when the terminal is a first type terminal, terminal measurement information and measured cell information may be collected to determine whether to use the signal threshold and the signal threshold, and the determined signal threshold may be transmitted to the terminal. As an example, the first type terminal is a stationary IoT (internet of things) terminal, and the node may determine whether the terminal is a first type terminal based on at least one of terminal type indication information and terminal subscription information. Additionally, the first signal threshold may be a signal threshold that excludes selection of a public land mobile network (PLMN) with a high signal quality that is not expected by the terminal, and the second signal threshold may be a signal threshold that excludes selection of a PLMN with a low signal strength and a high priority, as described above.

As the examples of the proposal method described above may also be included in one of the implementation methods of the present disclosure, it is an obvious fact that they may be considered as a type of proposal methods. In addition, the proposal methods described above may be implemented individually or in a combination (or merger) of some of them. A rule may be defined so that information on whether or not to apply the proposal methods (or information on the rules of the proposal methods) is notified from a base station to a terminal through a predefined signal (e.g., a physical layer signal or an upper layer signal).

The present disclosure may be embodied in other specific forms without departing from the technical ideas and essential features described in the present disclosure. Therefore, the above detailed description should not be construed as limiting in all respects and should be considered as an illustrative one. The scope of the present disclosure should be determined by rational interpretation of the appended claims, and all changes within the equivalent scope of the present disclosure are included in the scope of the present disclosure. In addition, claims having no explicit citation relationship in the claims may be combined to form an embodiment or to be included as a new claim by amendment after filing.


**Industrial Applicability**


The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

   obtaining, by the terminal, at least one signal threshold,
   determining a signal threshold used for network selection among the at least one signal threshold obtained by the terminal; and
   performing the network selection based on the determined signal threshold,
   wherein based on two signal thresholds being configured in the terminal and a first value being used as a cell selection criterion value based on consecutive first timer expirations, the terminal determines a first signal threshold among the at least one signal threshold as the signal threshold used for the network selection, and
   wherein based on the first value being not used as the cell selection criterion value, a second signal threshold among the at least one signal threshold is determined as the signal threshold used for the network selection.

2. The method of claim 1,

   wherein the signal threshold used for the network selection is an operator controlled signal threshold per access technology, and
   wherein based on the network selection being performed based on the determined signal threshold, the terminal selects a network with a high priority among networks capable of accessing a cell having a signal quality better than a signal level of the determined signal threshold.

3. The method of claim 1 or 2,

   wherein based on the terminal performing the network selection, an access stratum (AS) of the terminal decodes system information received from a cell having a strongest signal strength to derive a network ID, performs measurement on the cell, and delivers the derived network ID and cell measurement information to a non-access stratum (NAS) of the terminal, and
   wherein the NAS of the terminal determines the signal threshold to perform the network selection.

4. The method of claims 1 to 3,

   wherein the cell is a cell providing a connection establishment failure offset function, and the AS of the terminal determines use of the first value as the cell selection criterion value based on the consecutive first timer expirations and indicates use of the first value to the NAS of the terminal, and
   wherein the NAS of the terminal determines the signal threshold as the first signal threshold based on use of the first value.

5. The method of claims 1 to 3,

   wherein the cell is a cell doing not provide a connection establishment failure offset function, and the AS of the terminal determines non-use of the first value as the cell selection criterion value even after the consecutive first timer expirations and indicates non-use of the first value to the NAS of the terminal, and
   wherein the NAS of the terminal determines the signal threshold as the first signal threshold based on non-use of the first value.

6. The method of claims 1 to 5,
   wherein based on one signal threshold being configured in the terminal, the terminal receives a signal threshold from a first network node and performs the network selection based on the received signal threshold.

7. The method of claims 1 to 6,
   wherein based on two signal thresholds being configured in the terminal, the terminal receives both the two signal thresholds from a first network node.

8. The method of claims 1 to 7,

   wherein based on the two signal thresholds being configured in the terminal, the terminal receives the second signal threshold and determines the first signal threshold based on a sum of the second signal threshold and the first value, and
wherein the second threshold is determined as a default signal threshold.

9. The method of claims 1 to 8, wherein the first value is $Q_{offsettemp}$.

10. The method of claims 1 to 9,

wherein it is determined whether the terminal registered in a network is a first type terminal, and
wherein based on the terminal being the first type terminal, terminal measurement information and measured cell information are collected to determine whether the signal threshold is used and the signal threshold, and the determined signal threshold is transmitted to the terminal.

11. The method of claims 1 to 10,

wherein the first type terminal is a stationary Internet of things (IoT) terminal, and
wherein the node determines whether the terminal is the first type terminal based on at least one of terminal type indication information or terminal subscription information.

12. The method of claims 1 to 11,

wherein the first signal threshold is a signal threshold excluding selection of a public land mobile network (PLMN) with a high signal quality that is not expected by the terminal, and
wherein the second signal threshold is a signal threshold excluding selection of a PLMN with a low signal strength and a high priority.

13. A terminal operating in a wireless communication system, comprising:

at least one transceiver;
at least one processor;
at least one memory operably connected to the at least one processor and configured to store instructions that, when executed, cause the at least one processor to perform a specific operation,
wherein the specific operation:

obtains at least one signal threshold;
determines a signal threshold used for network selection among the obtained at least one signal threshold; and
performs the network selection based on the determined signal threshold,
wherein based on two signal thresholds being configured in the terminal and a first value being used as a cell selection criterion value based on consecutive first timer expirations, the terminal determines a first signal threshold among the at least one signal threshold as the signal threshold used for the network selection, and
wherein based on the first value being not used as the cell selection criterion value, a second signal threshold among the at least one signal threshold is determined as the signal threshold used for the network selection.

14. A method of operating a network node in a wireless communication system, the method comprising:

determining whether to perform signal threshold-based network selection in a terminal; and
transmitting at least one signal threshold to the terminal based on performing the signal threshold-based network selection,
wherein the terminal determines a signal threshold used for network selection among the at least one signal threshold and performs the network selection,
wherein based on two signal thresholds being configured in the terminal and a first value being used as a cell selection criterion value based on consecutive first timer expirations, the terminal determines a first signal threshold among the at least one signal threshold as the signal threshold used for the network selection, and
wherein based on the first value being not used as the cell selection criterion value, a second signal threshold among the at least one signal threshold is determined as the signal threshold used for the network selection.

15. A network node operating in a wireless communication system, comprising:

at least one transceiver;

at least one processor; and

at least one memory operably connected to the at least one processor and configured to store instructions that, when executed, cause the at least one processor to perform a specific operation,

wherein the specific operation:

determines whether to perform signal threshold-based network selection in a terminal; and

controls the at least one transceiver to transmit at least one signal threshold to the terminal based on performing the signal threshold-based network selection,

wherein the terminal determines a signal threshold used for network selection among the at least one signal threshold and performs the network selection,

wherein based on two signal thresholds being configured in the terminal and a first value being used as a cell selection criterion value based on consecutive first timer expirations, the terminal determines a first signal threshold among the at least one signal threshold as the signal threshold used for the network selection, and

wherein based on the first value being not used as the cell selection criterion value, a second signal threshold among the at least one signal threshold is determined as the signal threshold used for the network selection.

16. A device comprising at least one memory and at least one processor functionally connected to the at least one memory, wherein the at least one processor controls the device to:

obtain at least one signal threshold;

determine a signal threshold used for network selection among the obtained at least one signal threshold; and

perform the network selection based on the determined signal threshold,

wherein based on two signal thresholds being configured in the device and a first value being used as a cell selection criterion value based on consecutive first timer expirations, the device determines a first signal threshold among the at least one signal threshold as the signal threshold used for the network selection, and

wherein based on the first value being not used as the cell selection criterion value, a second signal threshold among the at least one signal threshold is determined as the signal threshold used for the network selection.

17. A non-transitory computer-readable medium storing at least one instruction, the non-transitory computer-readable recording medium comprising the at least one instruction executable by a processor,

wherein the at least one instruction controls a device to:

obtain at least one signal threshold;

determine a signal threshold used for network selection among the obtained at least one signal threshold; and

perform the network selection based on the determined signal threshold,

wherein based on two signal thresholds being configured in the device and the first value being used as a cell selection criterion value based on consecutive first timer expirations, the device determines a first signal threshold among the at least one signal threshold as the signal threshold used for the network selection, and

wherein based on the first value being not used as the cell selection criterion value, a second signal threshold among the at least one signal threshold is determined as the signal threshold used for the network selection.

100

Home Appliance 100e

IoT device 100f

Hand-held device 100d

AI Server/ device 100g

120 150a 130 150a

120

Network (5G)

XR device 100c

Robot 100a

150a 120a 150a 120 150a 120 150a

Vehicle 100b-1

Vehicle 100b-2

150b

## FIG. 1

**FIG. 2**

FIG. 3

**FIG. 4**

EP 4 572 407 A1

510 520 530 540

| UE | | VPLMN AMF | | HPLMN UDM | | SOR-AF |

1. REGISTRATION REQUEST

2. Registration procedure initiation

Nudm_UECM Registration request

Delete "ME support of SOR-CMCI" indicator if NAS registration type is either "initial" or "emergency"

Nudm_UECM Registration response

Nudm_SDM_Get_request

REGISTRATION ACCEPT

3a. Decision to send steering of roaming information, whether to request ACK from the UE, and how to obtain the list of preferred PLMN/access technology combinations or the secured packet.

3b. Nsoraf_SoR_Get_request

3c. Nsoraf_SoR_Get_response

3d. Securing information

4. Nudm_SDM_Get_response

5. Nudm_SDM_Subscribe_request

6. REGISTRATION ACCEPT

7. Steering of roaming information security check

REGISTRATION COMPLETE

8. If the security check fails or the UE is configured to receive steering of roaming information but did not receive it, then perform PLMN selection procedure and end the procedure

REGISTRATION COMPLETE

9. REGISTRATION COMPLETE

10. Nudm_SDM_Info_request

10a. Nsoraf_SoR_Info_request

11. UE performs PLMN selection procedure if higher priority PLMN is available

FIG. 5

30

**FIG. 6**

640 SOR-AF
630 HPLMN UDM
620 AMF
610 UE

1. Nudm_ParameterProvision Update request
2. Nudm_SDM_Notification request
3. DL NAS Transport
4. Steering of roaming information security check
UL NAS Transport
5. Nudm_SDM_Info request
6. Nsoraf_SoR_Info request

**FIG. 7**

Diagram nodes: 710 UE, 720 NG-RAN node 1, 730 NG-RAN node 2, 740 OAM

0. AIML model (Optional)
1. Measurement Configuration
2. Measurement(s)
3. UE measurement report
4. Input data for Model Training
5. Input data for Model Training
6. Model Training
7. Model Deployment/Update
8. Input data for energy saving model inference from NG-RAN node 2
9. UE measurement report
10. Model Inference
11. Model Performance Feedback
12. Network Energy Saving Action
13. Feedback
14. Feedback

EP 4 572 407 A1

**FIG. 8**

EP 4 572 407 A1

EP 4 572 407 A1

910

Node B_A

1: UE camps on the cell B under
controlling by NodeB B.

920

Node B_B

Smart meter

Smart
phone

Vending
machine

Cell A

Location Area A

2: UE tries to location
registration in Cell B

3: RACH transmission
failure will occur and
the T300 will expire.

4: UE keeps staying in
the cell B until cell reselection
criteria is fulfilled.

Cell b

Location Area B

**FIG. 9**

**1010** UE NAS  **1020** UE AS  **1030** SOR-AF

Threshold

Find strongest cell,
decode SIB of cell,
derive PLMN id of
cell and measure cell

PLMN ID, RSRP (if under -110 dBm)

RSRP of all PLMNs shall
be greater than received
threshold and PLMN
selection is performed
based on priority

**FIG. 10**

**1110** UE NAS  **1120** UE AS  **1130** SOR-AF

Threshold 1, Threshold 2

Find strongest cell,
decode SIB of cell,
derive PLMN id of
cell and measure cell

PLMN ID, RSRP (if under -110 dBm)

Threshold determination

RSRP of all PLMNs
shall be greater than
determined threshold and
PLMN selection is
performed based on priority

**FIG. 11**

1210

UE NAS

1220

UE AS

1230

SOR-AF

Threshold 1, threshold 2

Set Threshold as threshold 1
(common threshold)

Determine to apply
$Q_{offsettemp}$ as cell selection criteria
based on consecutive T300
expirations

Indication to use $Q_{offsettemp}$

Set Threshold as threshold 2
In cell id, freq id, PLMN id
(dedicated threshold)

Cell no longer provides
ConEstFail Offset function

Indication not to use $Q_{offsettemp}$

Set Threshold as threshold 1
In cell id, freq id, PLMN id
(dedicated threshold)

**FIG. 12**

START

S1310

TERMINAL OBTAINS AT LEAST
ONE SIGNAL THRESHOLD

S1320

DETERMINE SIGNAL THRESHOLD USED
FOR NETWORK SELECTION AMONG
AT LEAST ONE SIGNAL THRESHOLD

S1330

PERFORM NETWORK SELECTION BASED
ON DETERMINED SIGNAL THRESHOLD

END

**FIG. 13**

**START**

S1401
TERMINAL OBTAINS TWO
SIGNAL THRESHOLDS

S1402
DOES CELL
PROVIDE connEstFailOffset
FUNCTION?

YES → S1403
APPLY FIRST VALUE TO CELL
SELECTION CRITERION BASED ON
CONSECUTIVE FIRST TIMER EXPIRATIONS

NO → S1407
DOES NOT APPLY FIRST VALUE TO CELL
SELECTION CRITERION EVEN AFTER
CONSECUTIVE FIRST TIMER EXPIRATIONS

S1404
INDICATE USE OF FIRST VALUE
IN CELL TO HIGHER LAYER

S1408
INDICATE NON-USE OF FIRST
VALUE IN CELL TO HIGHER LAYER

S1405
DETERMINE SIGNAL THRESHOLD
FOR NETWORK SELECTION TO
BE FIRST SIGNAL THRESHOLD

S1409
DETERMINE SIGNAL THRESHOLD
FOR NETWORK SELECTION TO
BE SECOND SIGNAL THRESHOLD

S1406
SELECT NETWORK WITH HIGH PRIORITY
FROM AMONG NETWORKS THAT MAY
ACCESS CELL HAVING SIGNAL
QUALITY BETTER THAN SIGNAL
LEVEL OF FIRST SIGNAL THRESHOLD

S1410
SELECT NETWORK WITH HIGH PRIORITY
FROM AMONG NETWORKS THAT MAY
ACCESS CELL HAVING SIGNAL
QUALITY BETTER THAN SIGNAL
LEVEL OF SECOND SIGNAL THRESHOLD

**END**

**FIG. 14**

START

DETERMINE WHETHER TO PERFORM
SIGNAL THRESHOLD-BASED
NETWORK SELECTION IN TERMINAL
S1510

SIGNAL
THRESHOLD-BASED
NETWORK SELECTION
PERFORMED?
S1520

N

Y

TRANSMIT AT LEAST ONE SIGNAL
THRESHOLD TO TERMINAL
S1530

END

**FIG. 15**

## INTERNATIONAL SEARCH REPORT

| | International application No. |
|---|---|
| | **PCT/KR2023/003540** |

**A. CLASSIFICATION OF SUBJECT MATTER**

**H04W 48/06**(2009.01)i; **H04W 48/18**(2009.01)i; **H04W 24/08**(2009.01)i; **H04W 48/10**(2009.01)i; **H04W 84/04**(2009.01)i

According to International Patent Classification (IPC) or to both national classification and IPC

**B. FIELDS SEARCHED**

Minimum documentation searched (classification system followed by classification symbols)

H04W 48/06(2009.01); H04W 24/10(2009.01); H04W 36/30(2009.01); H04W 48/08(2009.01); H04W 48/16(2009.01); H04W 48/20(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오퍼레이터 제어 기반 신호 스레스홀드(operator controlled signal threshold), 셀 선택(cell selection), PLMN, 연결 설립 실패 오프셋(connection establishment failure offset), 타이머(timer), 네트워크 선택 (network selection)

**C. DOCUMENTS CONSIDERED TO BE RELEVANT**

| Category* | Citation of document, with indication, where appropriate, of the relevant passages | Relevant to claim No. |
|---|---|---|
| Y<br>A | DEUTSCHE TELEKOM et al. Signal level Enhanced Network Selection. S1-213329, 3GPP TSG-SA1 Meeting #95e, Electronic Meeting. 03 September 2021.<br>See sections 3.2.2.1 and 3.2.2.5. | 1-3,6-7,9-11,13-17<br>4-5,8,12 |
| Y | KR 10-1994022 B1 (QUALCOMM INCORPORATED) 27 June 2019 (2019-06-27)<br>See paragraph [0084]; and claim 1. | 1-3,6-7,9-11,13-17 |
| Y | US 2014-0112310 A1 (TELEFONAKTIEBOLAGET L M ERICSSON (PUBL)) 24 April 2014 (2014-04-24)<br>See claim 22. | 10-11 |
| A | KR 10-1774028 B1 (QUALCOMM INCORPORATED) 01 September 2017 (2017-09-01)<br>See claims 1-9. | 1-17 |

✓ Further documents are listed in the continuation of Box C.    ✓ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 June 2023** | **16 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/003540** |

| C. | DOCUMENTS CONSIDERED TO BE RELEVANT | |
| --- | --- | --- |
| Category* | Citation of document, with indication, where appropriate, of the relevant passages | Relevant to claim No. |
| A | KR 10-2022-0038091 A (SAMSUNG ELECTRONICS CO., LTD.) 25 March 2022 (2022-03-25)<br>See paragraphs [0104]-[0124]. | 1-17 |

Form PCT/ISA/210 (second sheet) (July 2022)

**INTERNATIONAL SEARCH REPORT**
Information on patent family members

International application No.

**PCT/KR2023/003540**

| Patent document cited in search report | | | Publication date (day/month/year) | Patent family member(s) | | | Publication date (day/month/year) |
|---|---|---|---|---|---|---|---|
| KR | 10-1994022 | B1 | 27 June 2019 | BR | 112017024187 | A2 | 17 July 2018 |
| | | | | CA | 2980775 | A1 | 17 November 2016 |
| | | | | CA | 2980775 | C | 01 December 2020 |
| | | | | CN | 107637131 | A | 26 January 2018 |
| | | | | CN | 107637131 | B | 19 October 2021 |
| | | | | CN | 113810885 | A | 17 December 2021 |
| | | | | EP | 3295718 | A1 | 21 March 2018 |
| | | | | EP | 3295718 | B1 | 08 September 2021 |
| | | | | JP | 2018-520548 | A | 26 July 2018 |
| | | | | JP | 2020-145701 | A | 10 September 2020 |
| | | | | JP | 6891128 | B2 | 18 June 2021 |
| | | | | JP | 7187502 | B2 | 12 December 2022 |
| | | | | KR | 10-2019-0075170 | A | 28 June 2019 |
| | | | | KR | 10-2411991 | B1 | 21 June 2022 |
| | | | | US | 10117152 | B2 | 30 October 2018 |
| | | | | US | 10609619 | B2 | 31 March 2020 |
| | | | | US | 10805855 | B2 | 13 October 2020 |
| | | | | US | 2016-0337931 | A1 | 17 November 2016 |
| | | | | US | 2019-0045420 | A1 | 07 February 2019 |
| | | | | US | 2020-0229063 | A1 | 16 July 2020 |
| | | | | WO | 2016-183025 | A1 | 17 November 2016 |
| US | 2014-0112310 | A1 | 24 April 2014 | CN | 104137606 | A | 05 November 2014 |
| | | | | CN | 104137606 | B | 10 July 2018 |
| | | | | EP | 2810480 | A1 | 10 December 2014 |
| | | | | EP | 2810480 | B1 | 30 March 2016 |
| | | | | US | 9344943 | B2 | 17 May 2016 |
| | | | | WO | 2013-115696 | A1 | 08 August 2013 |
| KR | 10-1774028 | B1 | 01 September 2017 | BR | 112016024480 | A2 | 15 August 2017 |
| | | | | CN | 106233789 | A | 14 December 2016 |
| | | | | CN | 106233789 | B | 25 May 2018 |
| | | | | EP | 3135063 | A1 | 01 March 2017 |
| | | | | EP | 3135063 | B1 | 16 December 2020 |
| | | | | JP | 2017-516393 | A | 15 June 2017 |
| | | | | JP | 6130083 | B1 | 17 May 2017 |
| | | | | US | 2015-0304946 | A1 | 22 October 2015 |
| | | | | US | 9491698 | B2 | 08 November 2016 |
| | | | | WO | 2015-164040 | A1 | 29 October 2015 |
| KR | 10-2022-0038091 | A | 25 March 2022 | CN | 114223241 | A | 22 March 2022 |
| | | | | EP | 4013118 | A1 | 15 June 2022 |
| | | | | KR | 10-2021-0055578 | A | 17 May 2021 |
| | | | | US | 2022-0295318 | A1 | 15 September 2022 |
| | | | | WO | 2021-029686 | A1 | 18 February 2021 |

Form PCT/ISA/210 (patent family annex) (July 2022)